Europäisches Patentamt

European Patent Office

Office européen des brevets

(19)

(11) Publication number: **0 067 531**
**A2**

(12) # EUROPEAN PATENT APPLICATION

(21) Application number: 82302489.8

(22) Date of filing: 17.05.82

(51) Int. Cl.³: **G 01 B 11/16**
**G 01 D 5/30**

(30) Priority: 18.05.81 US 265031
26.04.82 US 371321

(43) Date of publication of application:
22.12.82 Bulletin 82/51

(84) Designated Contracting States:
AT BE CH DE FR GB IT LI LU NL SE

(71) Applicant: Scott, David R.
44064 North 28th Street
Lancaster California 93534(US)

(71) Applicant: Rhoades, Thomas S.
420, Buckeye Drive
Colorado Springs Colorado 80919(US)

(72) Inventor: Scott, David R.
44064 North 28th Street
Lancaster California 93534(US)

(72) Inventor: Rhoades, Thomas S.
420, Buckeye Drive
Colorado Springs Colorado 80919(US)

(74) Representative: Stephens, Michael John et al,
M.J. Stephens & Co. Royal Building 11 St. Andrew's
Cross
Plymouth Devon PL1 2DS(GB)

(54) System for assessing the effect of forces acting on a structure, and detectors and optical sensors for use in such systems.

(57) A system is provided for collecting and interpreting data indicative of the effect of at least one of a plurality of forces (F) acting on a structure. The system comprises one or more structural moment detectors (413), and electronic circuitry (414c, 415) for processing and manipulating signals derived from the detector or detectors (413) in such a manner as to produce secondary signals (415a) indicative of the effect being monitored. The system is applicable to a wide range of end uses such as the checking of the structural integrity of aircraft and the detection of intruders within a building. A structural information detector (410) is also provided in which a structural moment detector (413) and associated electronics (414c, 415) are contained in a single housing (412). This detector (410) can be implemented with various optical arrangements including one built around a flexible light-transmission member.

./...

Croydon Printing Company Ltd

FIG-55

SYSTEM FOR ASSESSING THE EFFECT OF FORCES ACTING ON A STRUCTURE, AND DETECTORS AND OPTICAL SENSORS FOR USE IN SUCH SYSTEMS

The present invention relates to systems for collecting and interpreting data indicative of the effect of at least one of a plurality of forces acting on a structure; the invention also relates to structural information detectors and optical sensors suitable for use in such systems.

Structural moment detectors or flexural rigidity sensors are known which are constituted by optical sensors in the form of autocollimators insensitive to linear dynamic motion but responsive to angular deflection of one end of the sensor with respect to the other. For example, such sensors are disclosed in the patent to Rossire, U.S. No. 3,229,511 and in the publication entitled "The Structural Rigidity Sensor: Applications in Non-Destructive Testing", published by the Air Force Systems Command, United States Air Force (Frank J. Seiler, Research Laboratory, Publication SRL-TR-75-0017, October 1975). See also the U.S. patents to Okubo Nos. 4,159,422 issued June 26, 1979 and 4,164,149 issued August 14, 1979.

Systems which employ structural moment detectors to measure and record certain effects of forces acting on a structure are also disclosed in the publications described above. For example, the Rossire patent discloses an aircraft attitude control system in which a structural moment detector is used to sense wing loading and automatically adjust the attitude of the aircraft to maintain wing loading within safe operational limits. The Air Force publication and the Okubo patents disclose systems which employ structural moment detectors to obtain the "vibration signatures" of various structures such as airframes, buildings, aerospace vehicles, rotating machinery bearings, dams
and the like.

It is an object of the present invention to improve
on the prior art sensors and systems described above.

Accordingly, in one aspect, the present invention
provides a system for collecting and interpreting data
indicative of the effect of at least a selected one of a
plurality of forces acting on a structure, characterised
in that said system comprises, in combination: at
least one structural moment detector carried by said
structure for generating output signals in response
to said plurality of forces acting on said structure;
processing means for processing said output signals to
modify the information content thereof, including where necessary,
rejecting components of said signals indicative of
the effects of extraneous forces other than said
selected one; and signal-manipulating means for
manipulating the processed signals output by the
processing means to provide secondary signals responsive
to the condition of said structure as a result of the
application of said selected force.

The systems of the invention can be used in a wide
variety of applications which can, for convenience,
be roughly categorized, as follows (it being understood
that some of these systems and applications may overlap
or fall into more than one category):

Basic Measurement Systems
Structural Integrity Measurement Systems
Applied Structural Measurement Systems
Applied Load Measurement Systems
Applied Communication-Detection Systems

The systems of the invention can employ substantially
conventional structural moment detectors, the output
of which is simply raw data which does not directly indicate or give useful information concerning the effect of forces acting on a structure to which the sensor is attached. In such cases, the raw data from the sensors is conditioned and processed by external electronics, including microprocessors and computational software, usually necessarily located at locations remote from the sensors, themselves. Since some of the end-use applications of these systems necessarily require an array of such sensors located at widely spaced points on the structure under investigation, the complexity of the wiring necessary for the sensors to communicate with the signal-conditioning and data-processing equipment imposes cost and technical limitations. Additionally, the sensors employed in many of such systems are of conventional size, i.e., upwards of several inches in the major dimension thereof, which, in turn, limits the applications of these systems in those instances in which the sensors are required to be installed in confined spaces.

Also, the cost of manufacturing conventional flexural rigidity sensors and the time and cost of installing them is sometimes increased, owing to the fact that they are essentially two-piece devices, each separate piece containing portions of the optical sensing system. In the manufacture and installation of such two-piece devices, additional time and expense is encountered in optically aligning the two pieces of the device so as to achieve the desired end result. Finally, the size and structural features of such flexural rigidity sensors contributes significantly to subsidiary problems such as maintenance and/or replacement thereof, temperature sensitivity, etc.

It is therefore a further object of the present invention to provide a device (herein termed the "structural information detector") in which the raw signal from the optical sensor of an optical structural moment detector is converted and processed within a unitary device (either a single-piece device or a multi-component device in which each of the components is assembled to form an integral unit) such that the electrical signal output of the device has a directly useful information content which can be displayed or recorded by any conventional means or which can be directly utilized to activate control systems, obviating the need for complicated wiring and, in most cases, any external data-processing hardware and/or software.

This object is achieved, in accordance with another aspect of the present invention, by the provision of a structural information detector for collecting and interpreting data indicative of the effect of at least one of a plurality of forces acting on a structure, said detector including a housing adapted to be attached to the surface of said structure, optical means within the housing for detecting the relative orientation of spaced surface coordinate vectors of the structure and for generating primary signals in response to changes in the orientation thereof, circuit means within the housing for converting the primary signals to a form usable by signal-processing electronics, and signal-processing electronics within the housing, including computational software, for processing the converted primary signals to secondary signals. The secondary signals embody useful information which directly indicates the effect of at least one of the plurality of forces acting on the structure.

The structural information detector of the invention greatly reduces the complexity of wiring and circuitry used in the data collection and interpretation system under consideration. It will, of course, be understood by those skilled in the art that there may be instances in which various individual structural information detectors in an array may be required to communicate with each other, as well as with central display, recording or control hardware and/or software, but even in those instances, the complexity of the interconnecting wiring is significantly reduced in comparison with systems employing conventional flexural rigidity sensors having external signal conversion and data-processing hardware and/or software.

The structural information detector of the invention, when mounted on any particular structure or sub-components thereof, can be used to directly provide information on any one or more of the performance characteristics of the structure such as, but not limited to, the ability of the structure to carry loads, the loads on the structure, the existence of cracks within the structure, the detection of cracks as they occur within the structure, the effect of cracks on the ability of the structure to carry a load, the resonant or natural frequencies of the structure, the changes in the natural frequencies of the structure, the vibration levels existing within the structure, the response of the structure to natural or induced forces, the distribution of the stiffness of the structure for each of the natural frequencies and other data related to the integrity or condition of the structure upon which the structural information detector is mounted.

In one embodiment of the structural information detector of the invention, the optical means, the signal converting circuit and the data-processing electronics are carried by a single-piece semiconductor substrate received within the housing.

In another embodiment of the structural information detector of the invention, the housing comprises first and second housing sub-assemblies. The first housing sub-assembly contains the signal-converting circuit, the signal and data-processing electronics and those components of the optical means which include the light source, the photovoltaic detectors and the collimating lens. The light source and the photovoltaic detectors are carried on the inner face of a hollow barrel portion formed in the first housing sub-assembly and the collimating lens is carried proximate the open end of the barrel portion. The second housing sub-assembly contains, as another component of the optical means, a plane surface mirror carried on the inner end of a mating barrel portion formed therein. The mating barrel portion is shaped and dimensioned to receive the barrel portion formed in the first housing sub-assembly with an interference fit therebetween to form a unitary structurally integrated device. Means are provided for mounting the first and second housing sub-assemblies at spaced points on a structure.

According to a still further aspect of the present invention, there is provided an optical sensor, adapted for use as the said optical means of the structural information detector but which is also usable in flexural rigidity sensors and structural moment detectors of the prior art, said sensor comprising an elongate light transmission member formed of a light-transmitting flexible material and having a light-transmitting/receiving end and a reflecting end; a concentrating lens formed in the reflecting end of the light-transmission member; a light source carried by the light-transmitting/receiving end of the member and positioned to direct light through the member toward said reflecting end; light receiving means carried by the light-transmitting/receiving end of said member for receiving the light transmitted through the member from the light source to the concentrating lens and reflected thereby through the member to the light-receiving means, the light-receiving means being arranged to generate electrical signals in response to the received light; and means for interconnecting the ends of the light-transmitting member to spaced points on a structure such that bending of the structure causes corresponding bending of the light-transmission member and, in turn, causes a variation in the amount of light received by the light-receiving means.

As used herein, the term"structure" will be understood to include, as the context may indicate, an overall structure resulting from the assembly of sub-components or, as the context may indicate, one or more of the sub-components themselves. The term is also intended to include naturally occurring, as well as man-made, structures and, for example, may even include a living organism such as the human body.

As used herein, the term "forces acting on a structure" is intended to include not only primary external forces applied to the structure but also includes secondary external or internal effects which flow from the application of external forces or changes in the environment of the structure, such as, for example, strain energy released within the structure as a result of cracking, thermal stresses, gravity-induced effects, electromagnetic forces and stresses, and the like.

The term "surface" as used herein is intended to mean and include not only the exterior surface of a structure, but also any natural or artificial internal surface thereof including, without limiting the generality thereof, planes passing through an axis of the structure.

The term "surface coordinate vector" as used herein is intended to mean both the normal and the tangent to the surface of a structure and any angle therebetween.

Embodiments of the invention will now be particularly described, by way of example, with reference to the accompanying diagrammatic drawings, in which:

Fig. 1 is a sectional view of a typical prior art structural moment detector;

Fig. 2 is a typical schematic of the LED driver circuit of the structural moment detector of Fig. 1;

Fig. 3 is a typical schematic of the readout electronics circuits of the structural moment detector of Fig. 1;

Fig. 4 is a schematic illustration showing in a generalised manner, the structural-data collection and interpretation system of the invention;

Fig. 5 is an illustration of one embodiment of the system used to measure weight;

Fig. 6 illustrates another embodiment of the invention which is a system used for measurement of the displacement of a mass relative to a supporting structure;

Fig. 7 illustrates another embodiment of the invention which functions as an accelerometer;

Figs. 8-9 illustrate an embodiment of the invention which is a system for measuring ambient pressure;

Fig. 10-11 depict a specific implementation of one embodiment of the invention which is a device for measuring angles, for example, a device that accurately points a laser beam at an angle relative to a horizontal reference;

Figs. 12-15 depict devices embodying the invention for measuring torque and rotary power;

Fig. 16 depicts an embodiment of the invention in which the SMD systems are used to assess the structural integrity of an airframe;

Fig. 17 shows in greater detail a system for measuring aircraft structural integrity which is a special adaptation of the general system it illustrates in Figure 4;

Fig. 18 depicts an implementation of the system of the invention for measuring altered structural capability of an aircraft;

Fig. 19 depicts a typical implementation of the invention as used for assessing the structural integrity of helicopters;

Fig. 20 depicts a typical implementation of the invention as used for assessing the structural integrity of space boosters;

Fig. 21 depicts a typical implementation of the invention as used for assessing the structural integrity of spacecraft;

Fig. 22 depicts a system for assessing the structural integrity of buildings;

Fig. 23 depicts a system for assessing the structural integrity of bridges;

Figs. 24-25 depict a system for assessing the structural integrity of cargo vessels;

Fig. 26 depicts a system for assessing the structural integrity of offshore drilling platforms;

Fig. 27 depicts a system for assessing the structural integrity of dams;

Fig. 28 depicts a system for assessing the structural integrity of pipelines;

Fig. 29 depicts a system for assessing the structural integrity of land vehicles;

Fig. 30 depicts a system for assessing the structural integrity of pressure vessels;

Figs. 31-32 depict a system for assessing the structural integrity of railways;

Fig. 33 depicts an embodiment of the invention in which SMDs are employed in systems for detecting unauthorized intrusion into a secure building area;

Figs. 34-35 depict an application of the system of the invention to measure vehicle weight and balance;

Figs. 36-38 illustrates an embodiment of the invention which employs the SMD system to measure crane loads and assess the structural integrity of cranes;

Fig. 39 depicts an embodiment of the invention in which the SMDs are employed in systems for making geophysical measurements;

Fig. 40 depicts an embodiment of the invention used for monitoring the mechanical health of complex rotating or reciprocating machinery;

Fig. 41 depicts a system of the invention which is used for dynamic vibration simulation;

Fig. 42 depicts an embodiment of the invention which is used for aircraft navigation;

Fig. 43 depicts an embodiment of the invention which uses SMD systems for stabilizing optical platforms;

Fig. 44 depicts an embodiment of the invention in which SMD systems are used as replacements for conventional strain gages;

Fig. 45 depicts an embodiment of the invention utilized as a voice analyzing system;

Fig. 46 depicts an embodiment of  the invention which is used as a smoke detector;

Fig. 47 depicts an embodiment of the invention used for downhole communication in well drilling operations;

Figs 48-49 depict embodiments of the invention which are used for earthquake detection;

Fig. 50 illustrates an embodiment of the invention used for sonar measurements;

Fig. 51 depicts an embodiment of the invention which is used for vibration detection and location in vehicles such as automobiles;

Figs. 52-53 depict embodiments of the invention which are used for battlefield force detection; and

Fig. 54 illustrates an embodiment of the invention which is used as an automatic line judge.

Fig. 55  is a generalised block diagram illustrating the major sub-components of the structural information detector of the present invention;

Fig. 56 is a circuit schematic depicting an
analog circuit which functions to electrically interface
the optical detector of the structural information
detector with signal-processing electronics and perform
the data processing functions according to the presently
preferred embodiment of the invention;

Fig. 57 is a circuit schematic depicting the
current source circuit for the light-emitting diodes
of the optical sensor portion of the structural
information detector, in accordance with the presently
preferred embodiment of the invention;

Fig. 58 is a sectional view of one embodiment
of the structural information detector of the
invention;

Fig. 59 is a perspective view of a second
embodiment of the structural information detector
of the invention, in which the components are carried
by a semiconductor substrate;and

Fig. 60 is a perspective view of an
optical sensor of the invention which is usable
in the structural information detector of Fig. 55,
as well as in the structural moment detectors
of flexural rigidity sensors of the prior art.

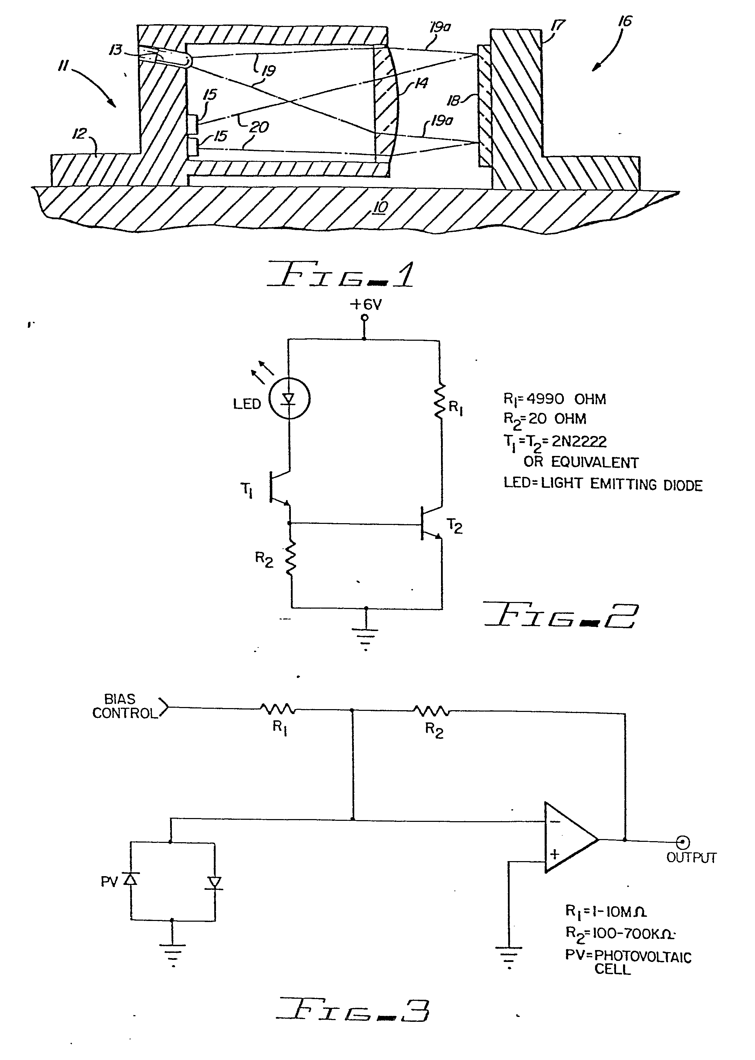

As used herein, the term "structural moment detector" means a device which measures the integral of the structure moment between two points on the structure. Such devices are known in the art, but, for clarity, a typical structural moment detector will be briefly described in Figs. 1-3 and the accompanying descriptive material.

Although Figs. 1-3 and the accompanying descriptive material refer to one particular form of structural moment detector, it will be understood by those skilled in the art that the term "structural moment detector" is intended to include other forms of the device which function in the same basic manner.

The structural moment detector is basically an autocollimator that is insensitive to linear dynamic motions but responds to angular deflection of one end of the sensor with respect to the other. Referring to Fig. 1, the structural moment detector consists of two separate parts which are mounted at spaced locations on a beam 10. One of the parts 11 is a support bracket 12 which carries a light-emitting diode (LED) 13, a collimating lens 14 and dual photovoltaic detectors 15. The other part 16 of the structural moment detector consists of a support bracket 17 which carries a plane front mirror 18. The two parts 11 and 16 are suitably joined by a bellows or other hood member (omitted for clarity of illustration) to exclude extraneous light. The LED 13 emits an infrared light beam 19 which is collimated by the collimating lens 14. The collimated light beam 19a impinges on the mirror 18 and, as indicated by the dashed lines 10, is reflected back through the collimating lens 14 to the photovoltaic cells 15. Angular motions, but not linear motions, of the mirror 18 result in varying amounts of infrared radiation reaching each of the photovoltaic cells 15. The difference in voltage output of the photovoltaic cells

15 is then proportional to the angular motion of the mirror 18 with respect to the cells 15.

When mounted on structural building components such as floor, ceiling or wall beams, such structural moment detectors can measure the deflection of the beam with a resolution of 1 milliarc second (4.85 x $10^{-9}$ radians) with a range of $\pm$ 6 arc seconds. Where such accuracy is not required, such devices can be fabricated which have a resolution of at least 1 arc second with a dynamic range of $\pm$ $3^{o}$. Such devices are capable of operating from DC to 50 MHz, the upper limit being established by the frequency limitation of the photovoltaic cells.

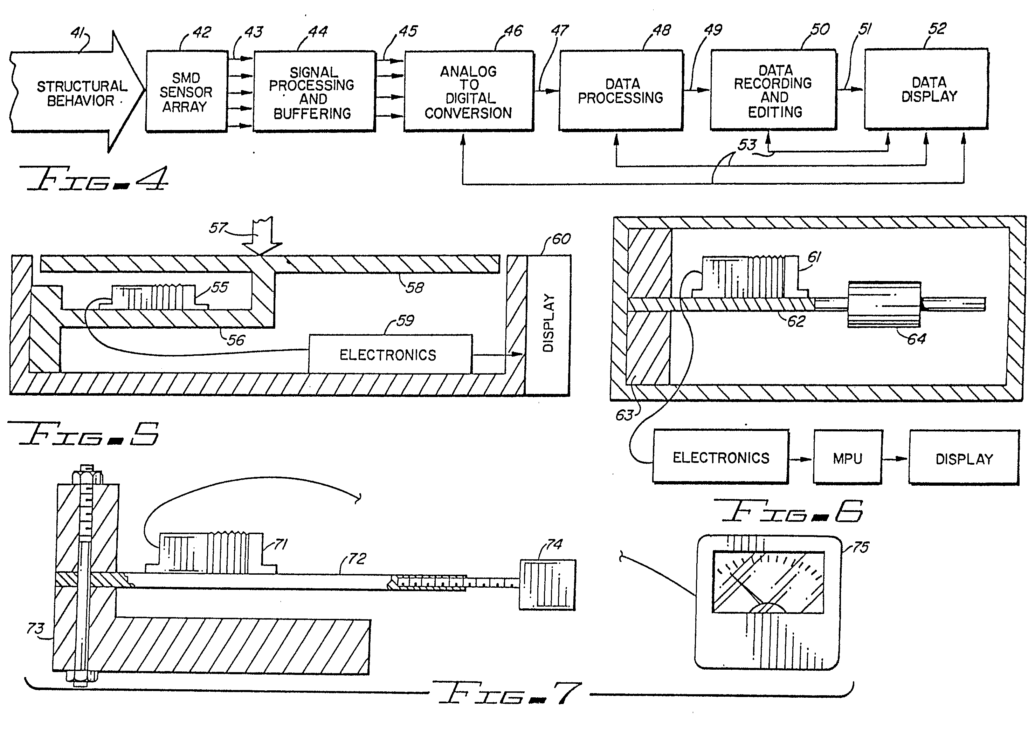

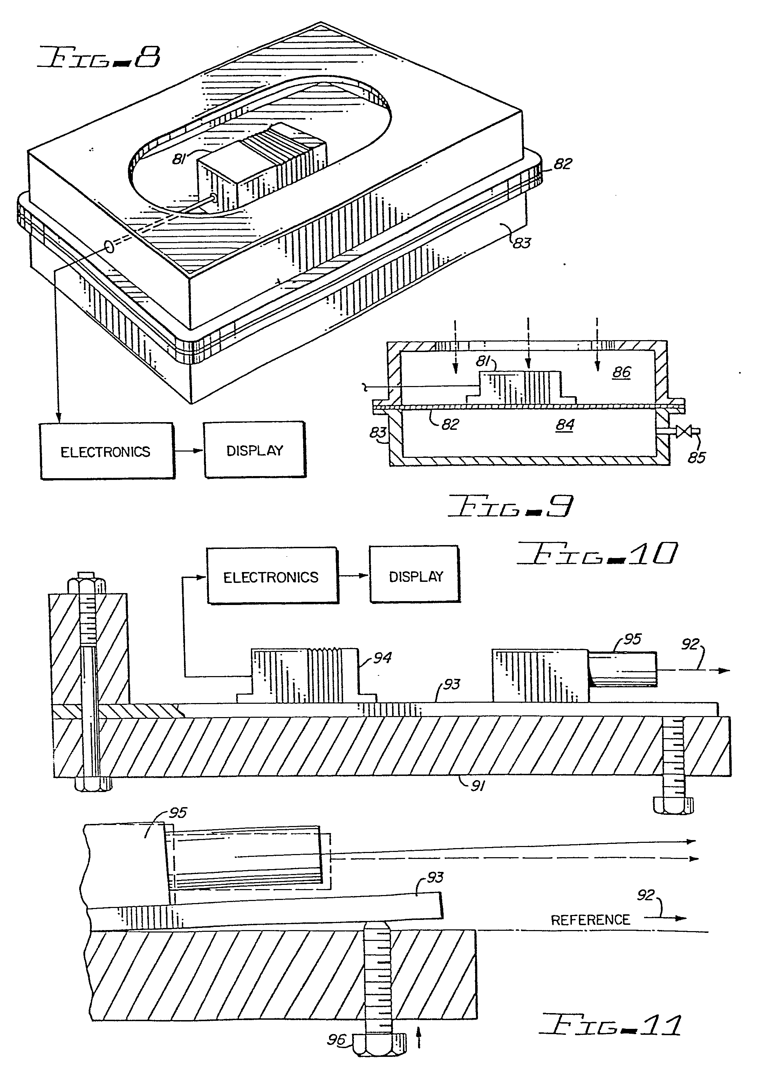

Typical circuits which are used in conjunction with the mechanical components of the structural moment detector of Fig. 1 are illustrated in Figs. 2 and 3. Fig. 2 is a schematic diagram of a suitable LED driver circuit which is a simple constant current source circuit which is required to provide a light source with constant light intensity.

A typical suitable readout circuit is illustrated in Fig. 3, which depicts an analog output circuit consisting of a first stage amplifier with common mode rejection that permits linear operation of the photovoltaic cells.

The operation of the structural moment detector can be illustrated by reference to a simplified example of a cantilevered beam which is loaded and the structural moment detector is mounted at points a and b located near the supported end of the cantilevered beam. If the deflection of the beam is measured as θ, the angle between surface tangents at points a and b, the output voltage of the photovoltaic cells is proportional to this angle and, according to the Area Moment Theorem

$$V_{out} \propto = \frac{\int_a^b M dx}{EI} = \frac{1}{EI} \int_a^b M dx$$

where

M is the applied moment between points a and b

E is the modulus of elasticity

I is the moment of inertia

$\theta$ is the angular difference between surface tangents at points a and b

x is the linear surface distance between points a and b.

If a load P is placed on the end of a beam of length L and $\delta$ is the distance between points a and b, then

$$V_{out} \propto \theta = \frac{1}{EI} \quad \frac{PL\delta}{2}$$

To illustrate the sensitivity of the structural moment detector, a load of 1 gram was placed on the end of an 8" cantilevered beam. The device was mounted near the support of the beam such that points a and b were 1.5" apart. With this load

$$V_{out} = 30 \text{ millivolts}$$

and

$$\theta = 1.3 \times 10^{-7} \text{ radians.}$$

Since it is impossible to load a structure without changing the total moment which occurs between two points on the structure, it is possible to use the structural moment detector as an extremely accurate and extremely sensitive sensor having a range which far exceeds that of conventional sensors of the prior art.

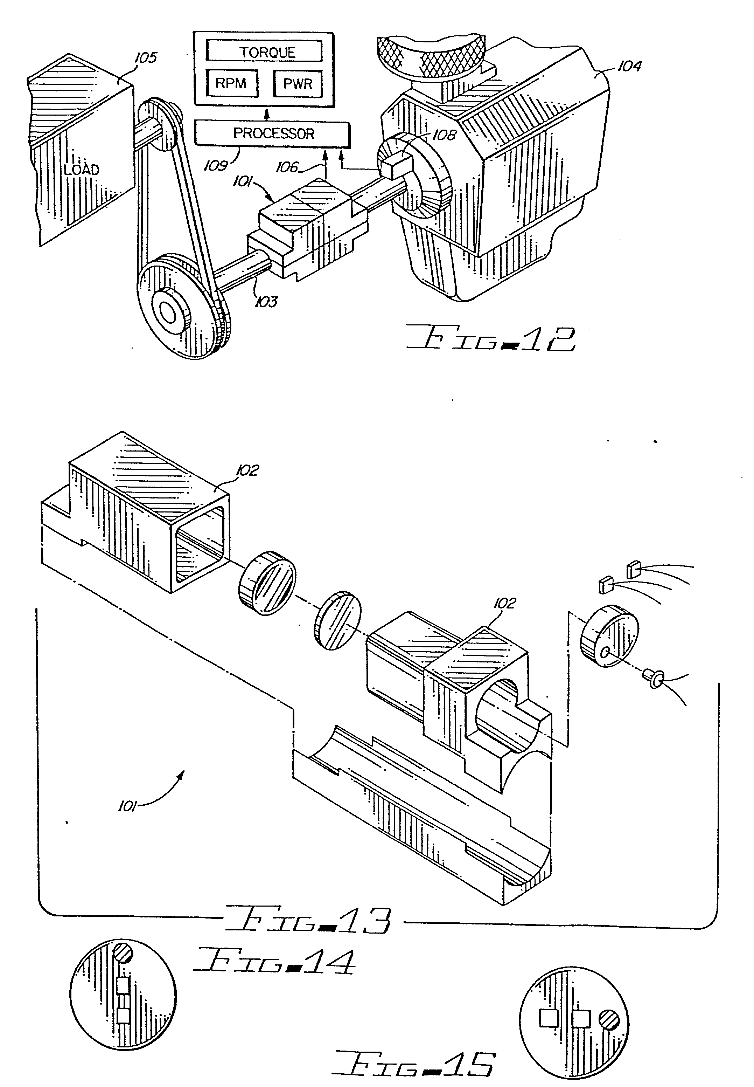

As previously indicated, the various systems of the invention fall into several basic categories. In general, however, with exceptions noted below, the various systems will generally include similar elements in addition to the structural moment detectors. The general system of the invention is schematically illustrated in Fig.4. As shown in Fig. 4, the structural behaviour 41, which is effected by the forces acting on the structure, are sensed by an array 42 of structural moment detectors (SMD's), located on the structure. The SMD's 42 are located on the structure so as to provide primary electronic signals 43 which are proportional to the structural behaviour parameter of interest. The primary electronic signals 43 from the SMD array 42 are fed to signal processing and buffering equipment 44, which includes electronic circuitry which modifies the information content of the primary signals 43 (e.g., rejection of the background noise, rejection of signal components induced by other forces, etc.) and which electrically isolate the sensors from the remainder of the system. The processed signals 45 are then transmitted to analog-to-digital converters 46 which convert the analog information in the processed signals 45 to a digital format compatible with various digital processors, recorders, editors and/or display units. The digital signals 47 are then transmitted to and a ta processor 48 which will usually be a single-frame computer which is capable of accepting digital data and manipulating it in a predetermined, programmable fashion, in order to convert the digitized measurement information into a digital representation of the desired system data. The digital representation data 49 is optionally transmitted to data recording/editing equipment 50 which may provide for permanent recording of all or part of the acquired data for later use and which may, additionally, provide manual editing capability. The recorded and/or edited data 51 may optionally be transmitted to data display equipment 52 which provides visual display of the acquired data and additionally, may provide for the predetermined alteration of the means by which the data processing equipment 48 is transforming acquired data or the manner in which data is digitized, recorded, edited and/or displayed. Feedback loops 53 may be optionally provided, through which the information at one stage is fed backwardly and/or forwardly to another stage of the system to provide improved accuracy, estimation, prediction or other similar functions. These feedback paths may be electrical, optical, mechanical and/or may involve human interpretations and adjustments.

Various improved systems and applications which embody the present invention will be discussed below in the groups of categories previously indicated.

## BASIC MEASURING SYSTEMS

According to the invention, SMD's are employed in systems which perform measurement of basic parameters such as weight, displacement, acceleration, pressure, angle and torque/power.

### Weight Measuring System

In this embodiment, the SMD is mounted on a suitable structure such as a cantilevered beam with known flexural rigidity. The output of the SMD is

$$O_{SMD} = \frac{1}{EI} \int f(loading)dx$$

where $\frac{1}{EI}$ is the effective flexural rigidity of the structure and f(loading) indicates the local bending due to the structural loading. If EI is known, then the sensor output is directly related to the weight (load) applied.

The SMD measurement system is much more sensitive than current systems which employ balances, pressure, transducers, strain gages or springs. Hence, this system provides for precise measurements of weight without moving parts and without sophisticated electronics.

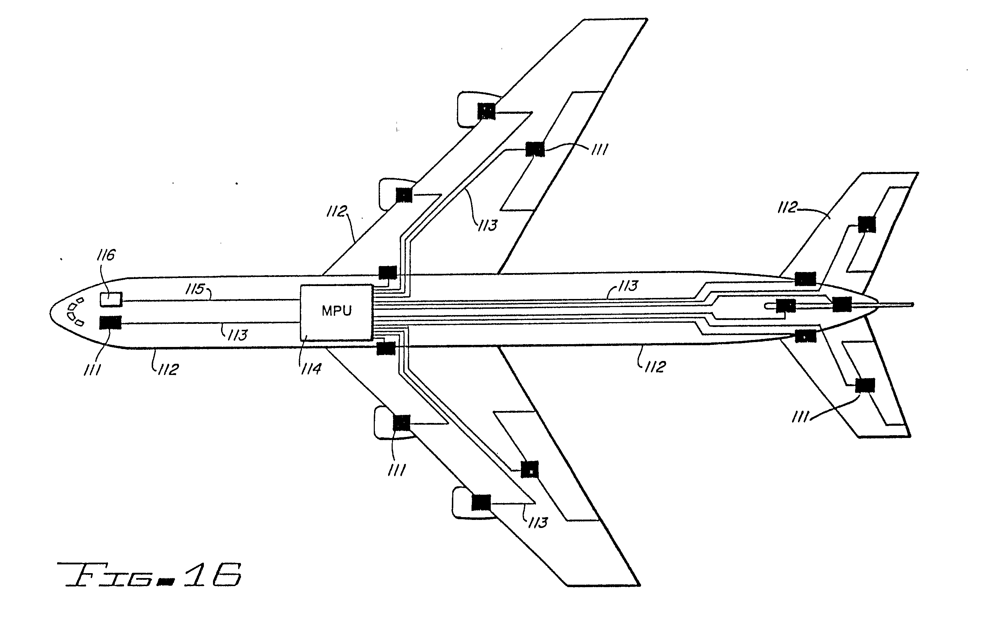

Fig. 5 shows an embodiment of this system in a bathroom scale. The SMD 55 is mounted on a cantilevered beam 56. Weight indicated by the arrow 57 on the platform 58 deflects the beam 56. The SMD 55 output is processed in the electronics package 59 and the processed data is transmitted to the display 60.

Similar implementation can be made for precision measurement of very small weights or very large weights by appropriate design of the cantilevered beam.

Displacement Measuring System

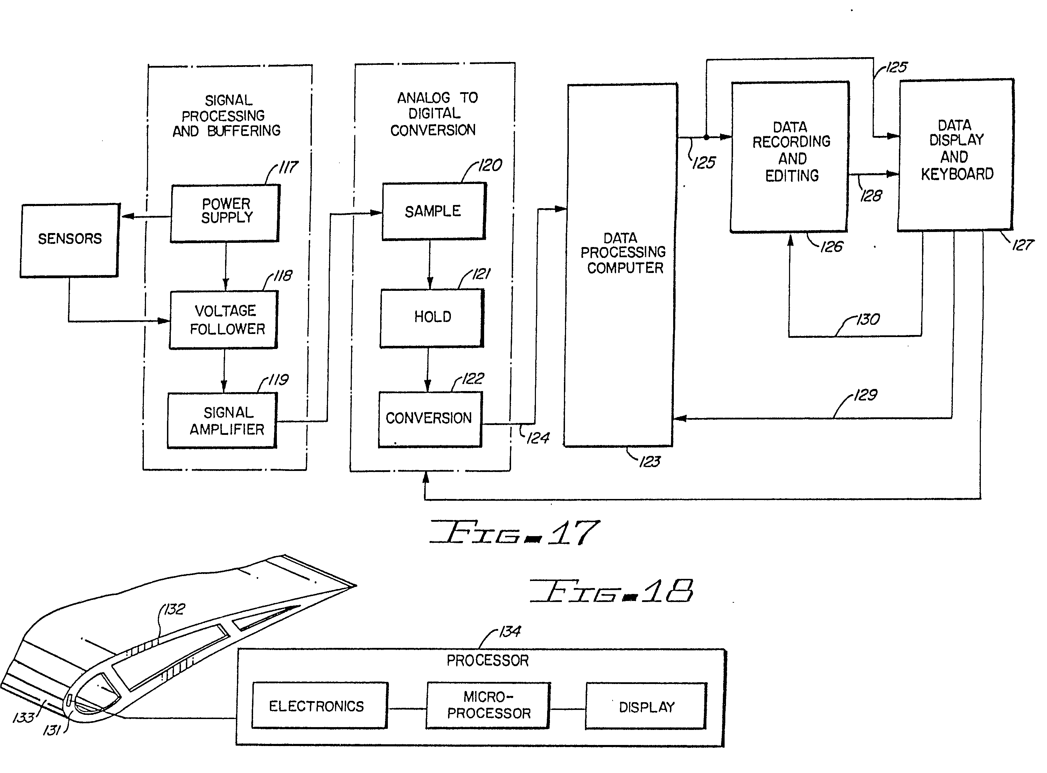

In this embodiment of the invention, the SMD is used in a system for measuring the displacement of a mass relative to a supporting structure or vice versa. Referring to Fig. 6, an SMD 61 is mounted on a cantilevered beam 62 which is supported in a rigid case 63 with a mass 64 located at the tip of the beam 62. The output of the SMD 61 is processed and used with the beam equations to yield a secondary signal which provides a direct measurement of the displacement.

Thus, if the case 63 is rigidly mounted to another structure, and that structure suddenly moves, the inertia of the mass 64 causes it to remain instantaneously fixed while the case 63 moves with the structure. The output of the SMD, suitably processed, is then a direct measurement of the displacement of the structure relative to its initial position. This information can then be used to correct calculations or in a feedback loop to reposition the structure.

This information is currently obtained by using accelerometers and integrating their output twice. According to this embodiment of the invention, the required integrations are eliminated through the use of elementary beam theory.

Acceleration Measurement System

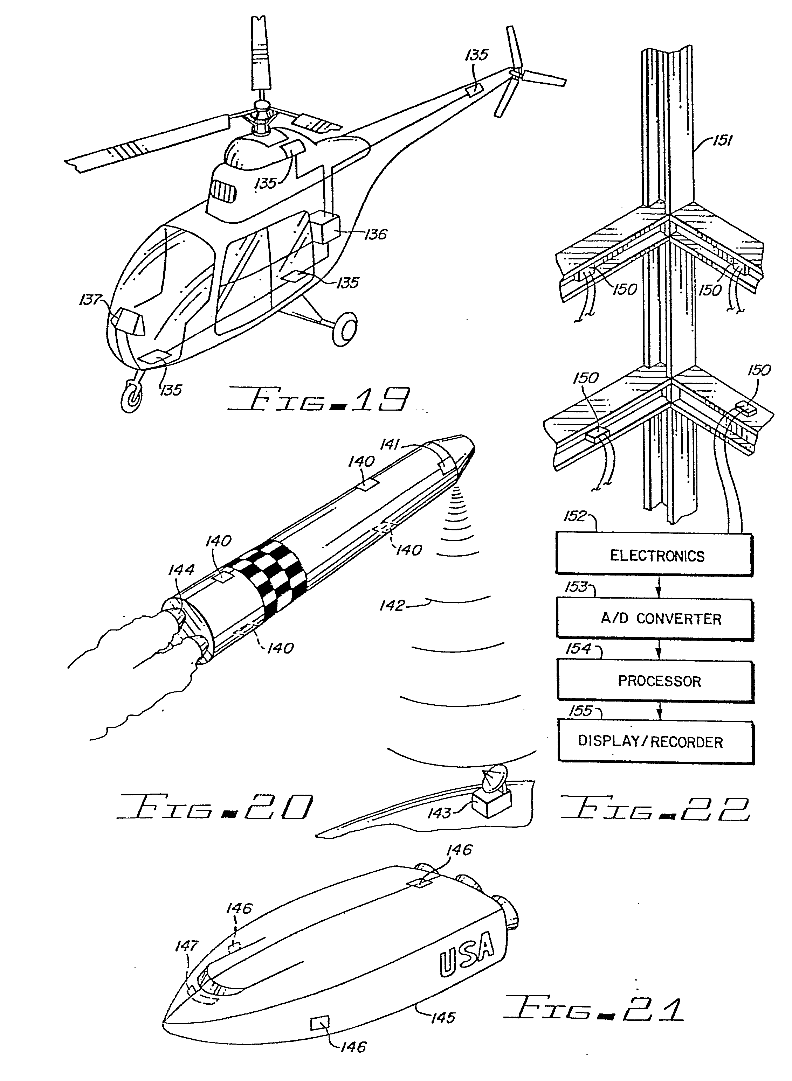

In this embodiment of the invention, the SMD is used in a system which functions as an accelerometer. Referring to Fig. 7, the SMD 71 is mounted on a suitably configured and tuned cantilevered beam 72 which is firmly supported in a case or mounting structure 73. An adjustable weight 74 at the free end of the beam 72 permits the beam/SMD combination to be adjusted for sensitivity and natural frequency.

The output of the SMD is fed to an electronics and processing module 75 where the information is processed according to programmed instructions for further use or display.

Pressure Measuring System

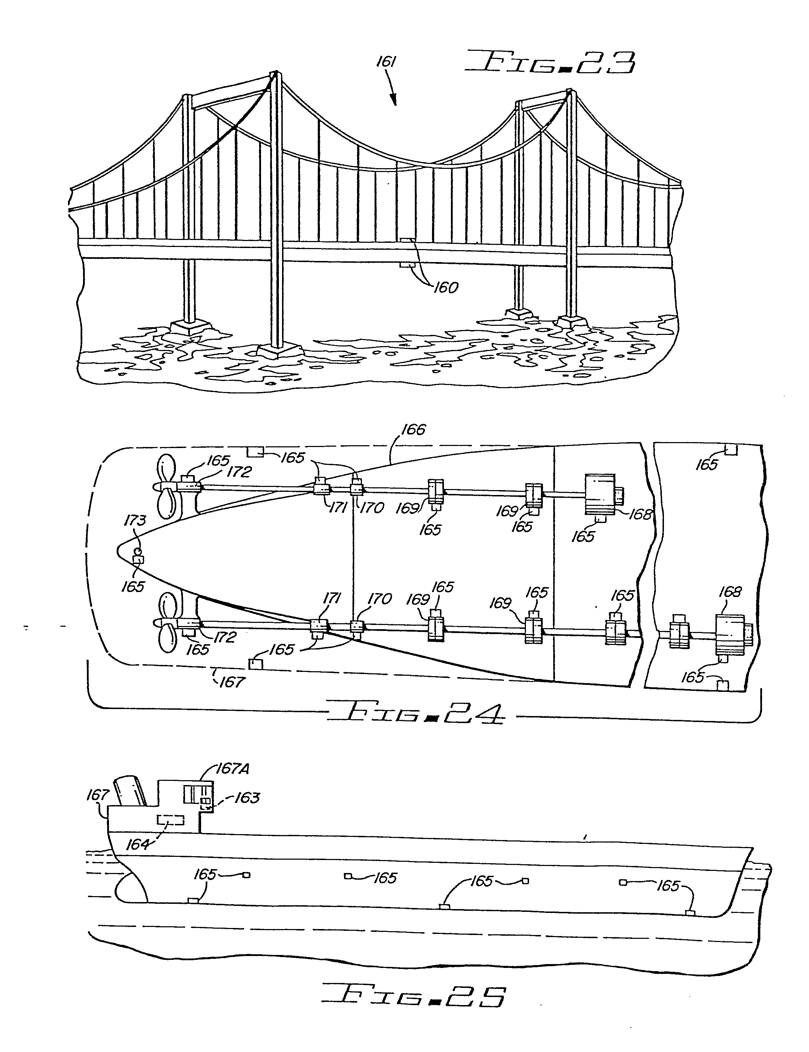

In this embodiment, the invention provides a system for measuring pressure. Referring to Fig. 8, an SMD 81 is mounted on a rectangular diaphragm 82 which separates two chambers in a rigid case 83. The lower chamber 84 may be evacuated, pressurized to a known pressure, or exposed to ambient pressure through a valve 85 which will permit only very slow equalization of the pressure in chamber 84 with ambient pressure. The upper chamber 86 is open to ambient pressure. In operation, the pressure differential across the diaphragm 82 causes it to deflect and the magnitude of this deflection is sensed by the SMD 81 which produces an output signal which can be calibrated to produce a direct measurement and/or readout of pressure. This system provides for substantial improvement of current pressure transducers in that the extreme sensitivity of the
SMD 81 and the ability to vary the thickness and
material of the diaphragm 82 provides the capability
for measuring very small differential pressures. By
using thicker diaphragms and less-sensitive SMD's,
the system can be used to measure massive pressures.
The frequency response of the SMD enables the device
to operate over a wide band width of 0-50 KHz. These
systems can be used to measure pressure differentials
as well as absolute pressure, i.e., the reference may
be to other than ambient pressure.

Angle Measuring System

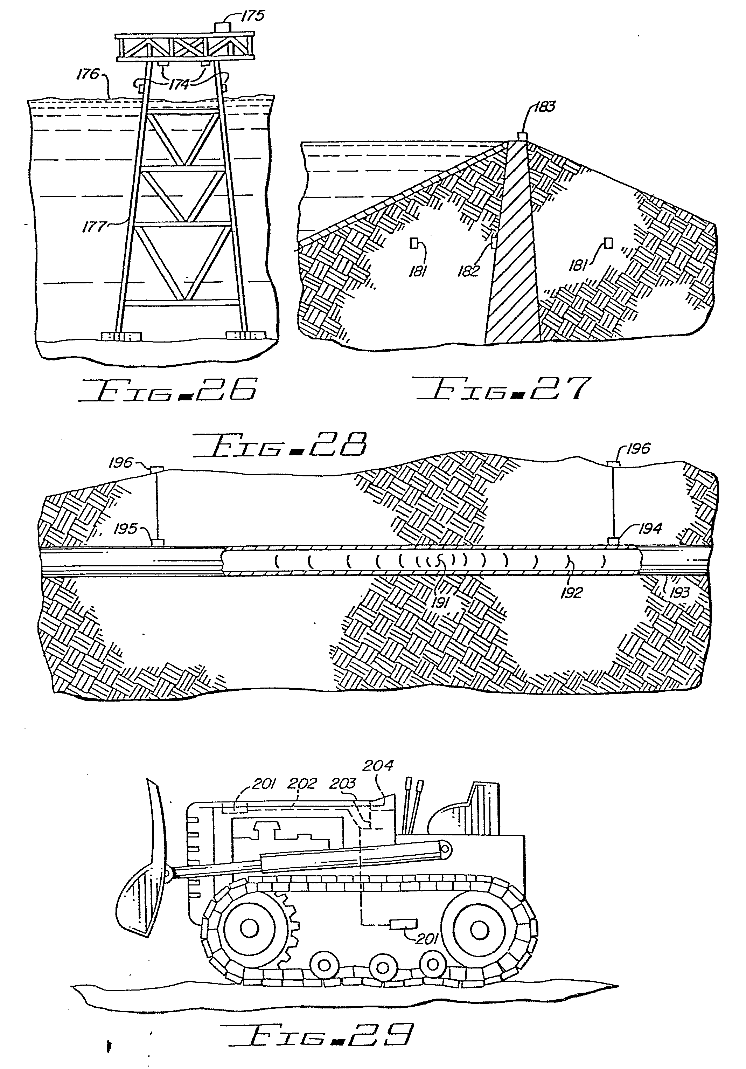

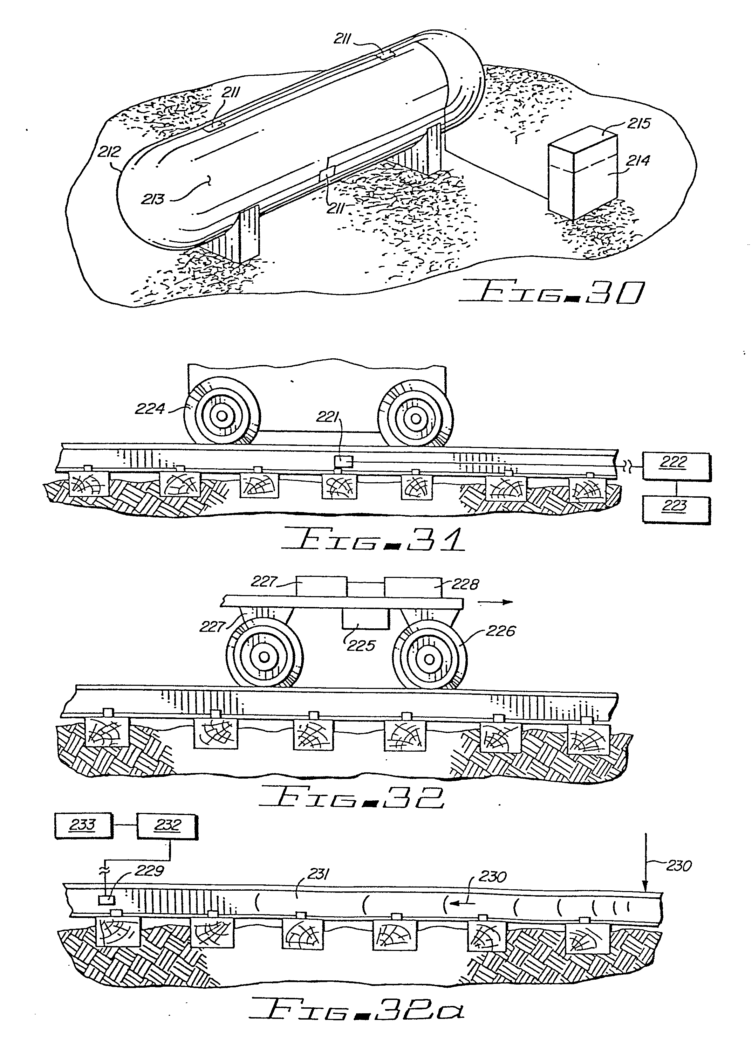

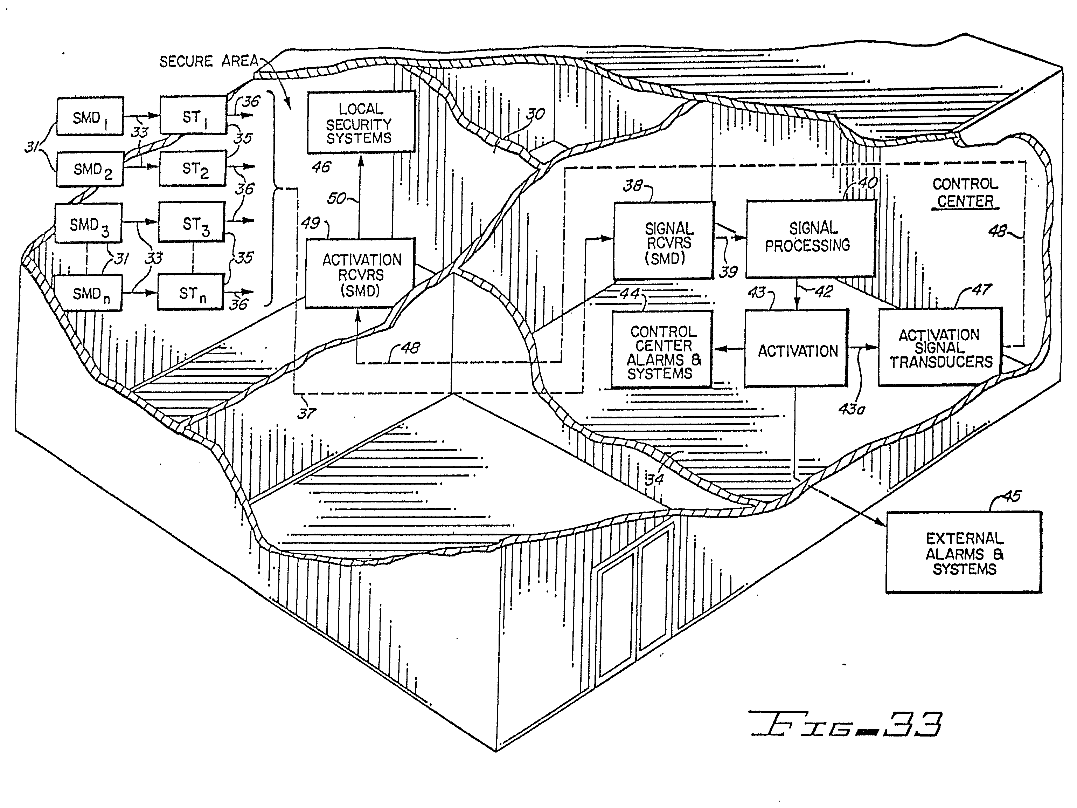

In this embodiment, the SMD is used in a system for
accurately measuring angles or for precisely aligning
other devices such as lasers. Figs. 10-11 depict a
specific implementation of this system, a device which
can be used to accurately point a laser beam at an
angle relative to a horizontal reference. The system
of Figs. 10-11 consists of a baseplate 91 rigidly
aligned in the reference direction 92. A cantilevered
beam 93 is mounted on the baseplate 91. The SMD 94
is attached to the beam 93. The laser 95 is mounted
on the beam 93 such that the beam is initially aligned
with the reference direction 92. In operation, the
thumb screw 96 is turned to elevate the tip of the
beam 93. This deflection is sensed by the SMD 94
and the output is calibrated to provide a direct
reading of the angle, adjusted to give the desired
pointing angle.

To measure an angle with the device shown in
Figs. 10-11, the device is positioned at the apex of the
angle to be measured. The laser beam 95 is initially
pointed along one leg of the angle to be measured.
The thumb screw 96 is then adjusted until the laser
beam 95 points along the other leg of the angle. The
SMD reading is then a direct measurement of the angle.

## Torque/Rotary Power Measuring System

In this embodiment of the invention, an SMD is incorporated in a system for real-time measurement of the torque and/or rotary power of an operating machine. In almost all industrial efforts it is necessary to generate, transmit and receive rotary shaft power. In order to determine the efficiency with which any particular rotary machine performs its intended function, it is necessary to provide a system for measuring the torque and/or shaft power of the machine. This is usually accomplished by devices which apply a specifically designed artificial load to the shaft. This load and the rotational speed permit calculation of the shaft power. Despite relatively low resolution and accuracy, such devices represent the state-of-the-art in rotary power measurement. A particular disadvantage of the prior art rotary power measuring systems is that they do not provide a measure of the shaft power when the system is driving its actual load.

The present invention provides a system for accurately indicating real-time rotary power delivered. When a shaft of any cross-sectional area or shape is subjected to torque, the shaft undergoes twist. An SMD, mounted on this shaft, can measure the amount of twist and hence, the torque. The power delivered to the rotary shaft is equal to the torque times its angular velocity. Thus, direct measurement of torque coupled with rotational speed provides a real-time measurement of shaft power.

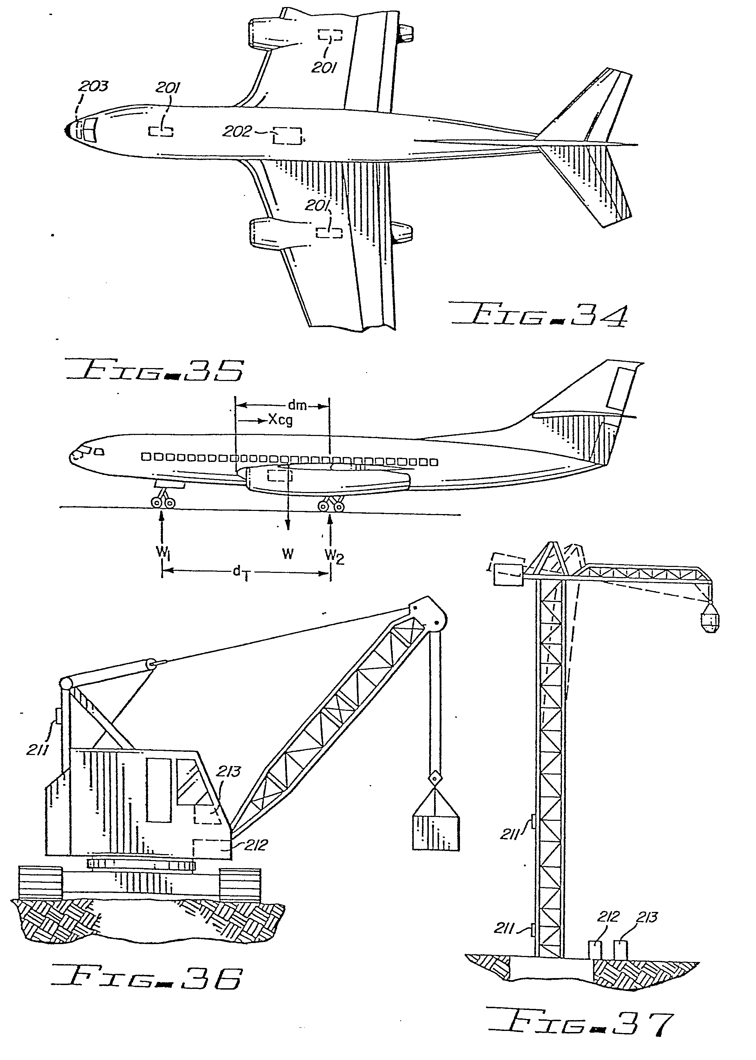

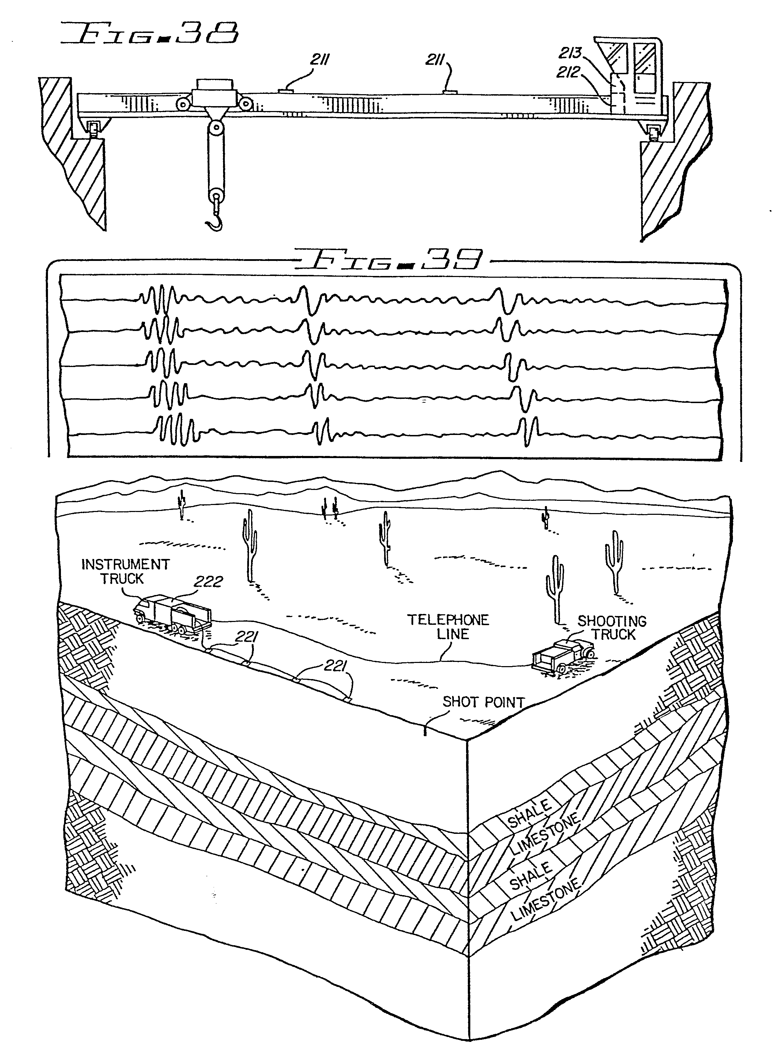

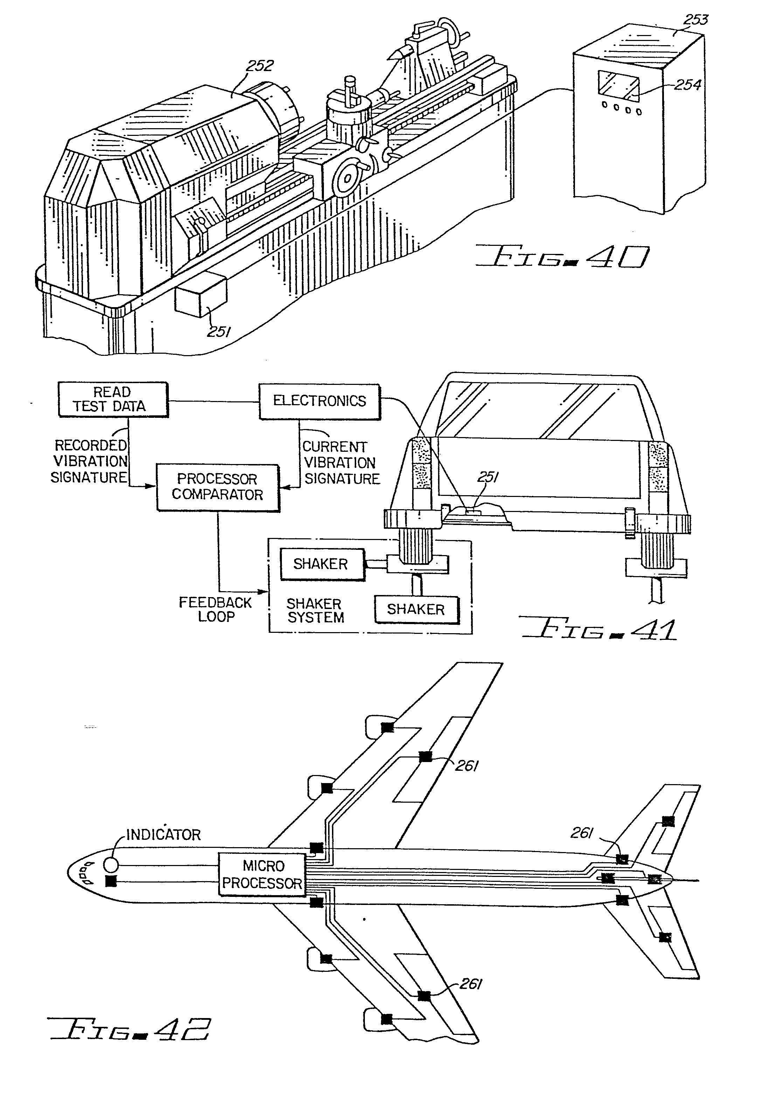

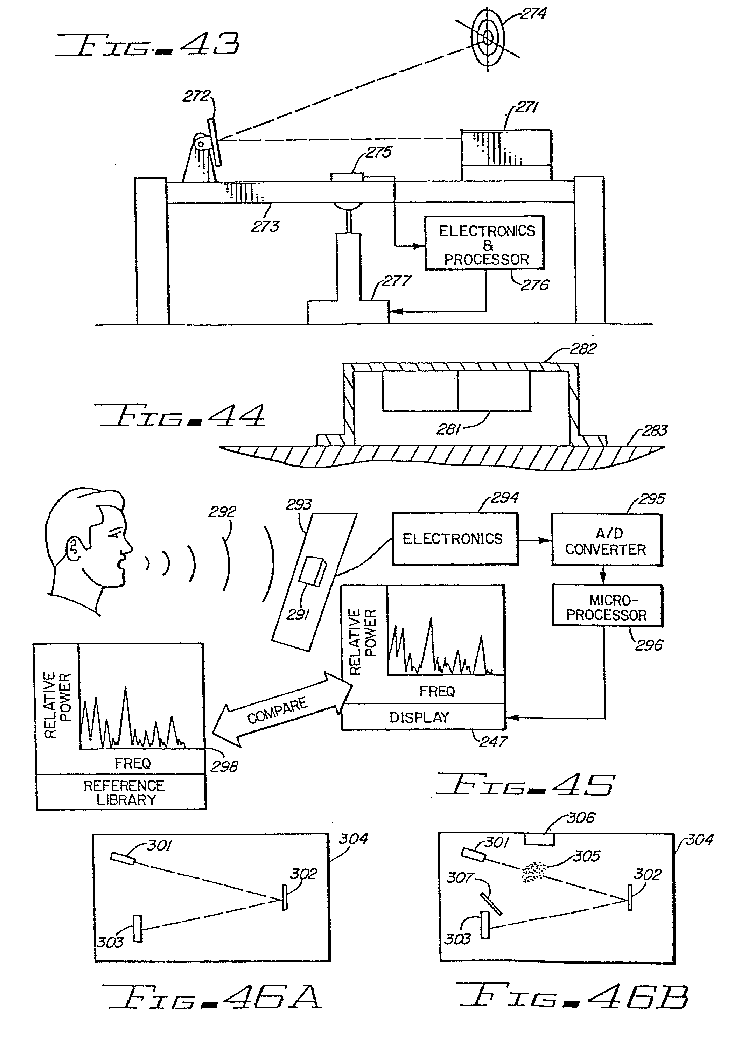

Referring to Figs. 12-15, according to this system, an SMD 101 provided with a specially designed case 102 which is modified to fit the surface of an engine output shaft 103, is mounted on the output shaft 103 of an engine 104 which drives a load 105. The output 106 of the SMD 101 and the output 107 of an r.p.m. sensor 108 are fed to a data processor 109. The outputs of the data processor 109 are torque, r.p.m. and power signals which can be displayed or otherwise used in other operations.

## STRUCTURAL INTEGRITY MEASUREMENT SYSTEMS

In addition to performing the basic measurements described above, SMD's are employed, in accordance with another aspect of the invention, in systems which measure the integrity of various structures.

### Aircraft Structural Integrity System

In accordance with this embodiment of the invention, SMD's are employed in systems which provide information concerning structural fatigue, active crack detection, overload conditions, load history and vibration for the purpose of assessing structural loads on aircraft, the remaining lifetime of the aircraft, the condition of components of the aircraft, the operational history of the aircraft, the compliance of structural members with known loadings, the current ability of the aircraft to carry its design loads and to provide more effective and efficient maintenance and test procedures.

The ultimate function of the aircraft structural integrity system of the present invention is to prevent catastrophic structural failure of the aircraft through structural integrity assessment.

Airframes are designed to meet desired strength and fatigue life requirements by projecting the average load environment of the aircraft over the expected airframe lifetime. These projections are, in turn, based on averaged load history data concerning similar aircraft designed for similar services. Since aircraft receive such diversified use, however, it is very difficult to assign confidence limits to the statistics thus assumed. One particular aircraft could experience a load history quite different from the expected load history assumed in the original design. In terms of accumulated damage, this airframe could actually be much "older" than the recorded engine or airframe hours would suggest. Nevertheless, aircraft are normally inspected for critical flaws based on the accumulated flying time or engine operation time. The assumption is that this number of hours is correlated with the load history actually experienced by the aircraft. The possibility for error is obvious; 100 hours flying along the front range of the Rocky Mountains can represent a considerable different load environment from 100 hours flying over Kansas wheatfields. Nevertheless, present aircraft structural integrity assessment techniques almost invariably employ airframe or engine operating time to determine when inspections should be made, followed by actual inspection of the airframe to estimate the remaining fatigue lifetime.

According to the present embodiment of the invention, aircraft structural integrity assessment is performed using systems which include SMD's which act, in effect, as a damage counter, providing continuously updated real time assessment of the remaining fatigue lifetime of the airframe. The system achieves this function by one or a combination of monitoring structural cracks as they occur and continuously assessing the remaining fatigue lifetime of the airframe (structural failure monitoring), warning of impending failure of the airframe due to loads which approach or exceed the design loads (load measurement), by warning of impending engine failure (vibration monitoring), and by directly measuring the compliance of structural members subjected to known loads.

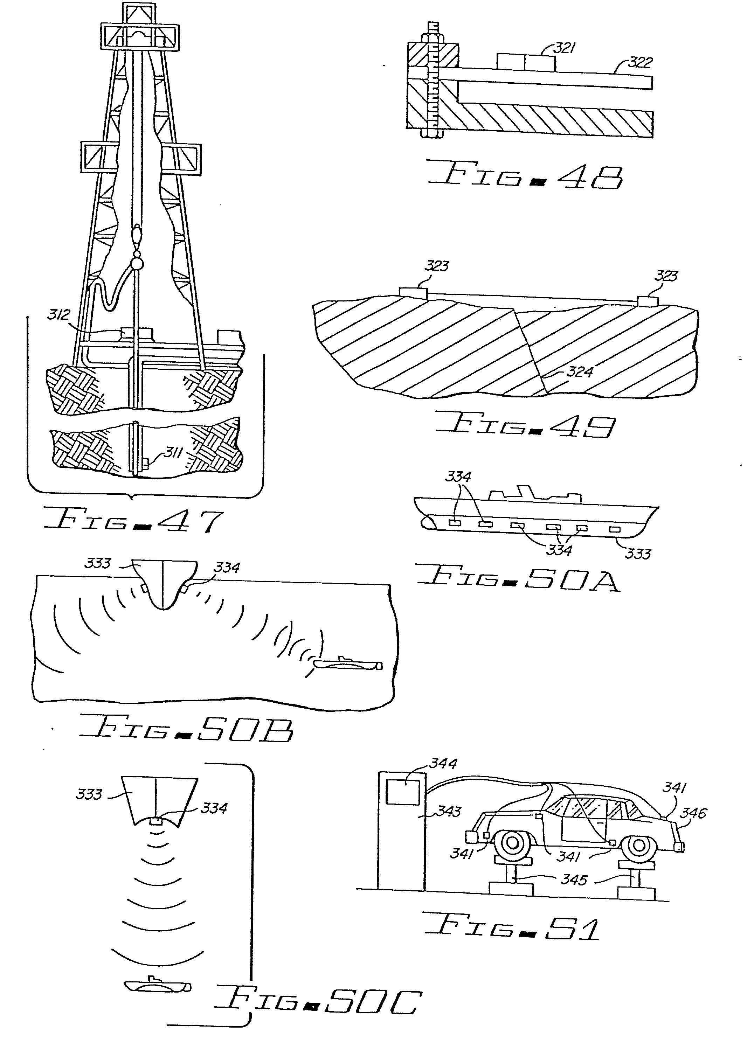

Referring to Fig. 16, in the present embodiment of the invention a plurality of SMD's 111 are mounted at selected locations on airframe 112 and are properly oriented to be sensitive to the selected parameter to be measured. The SMD's 111 are connected through cabling 113 to the processing electronics 114 (signal processing and buffering, A-D conversion, data processing, data recording and editing) and the output 115 is suitably displayed 116 and/or stored.

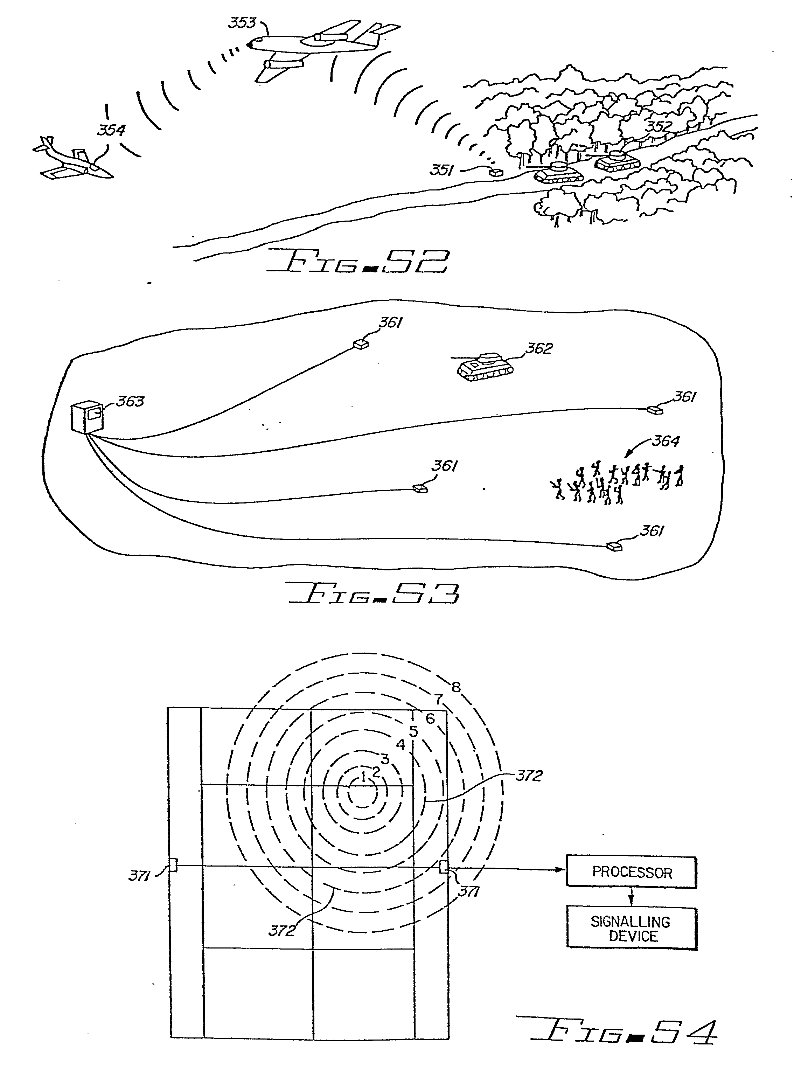

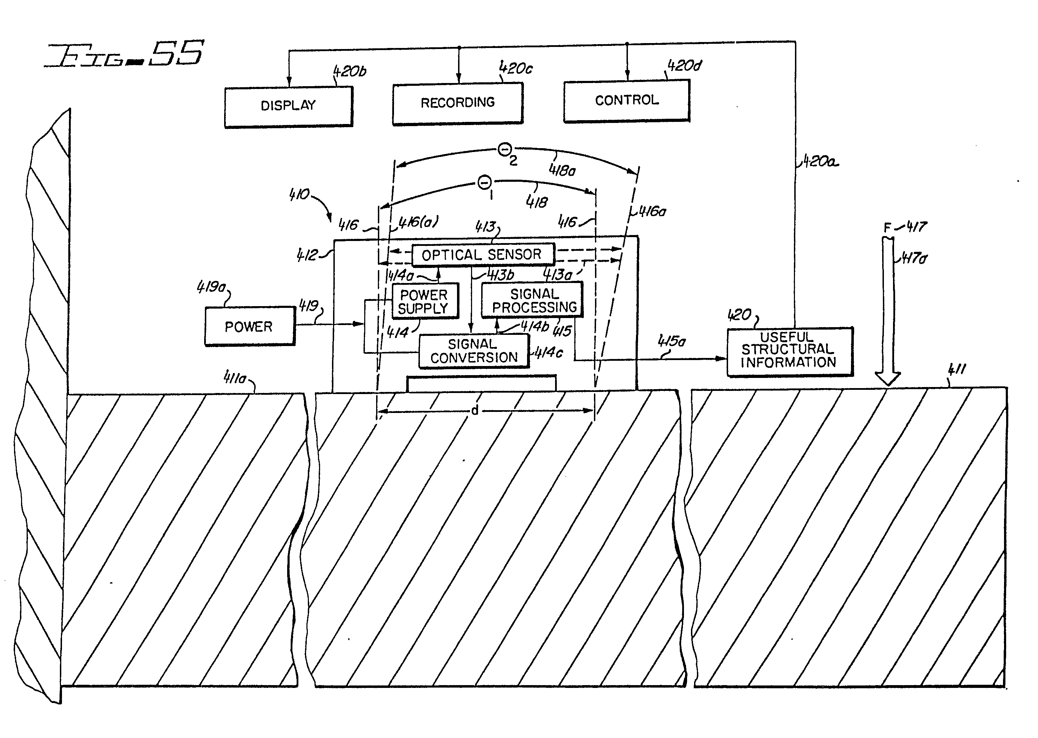

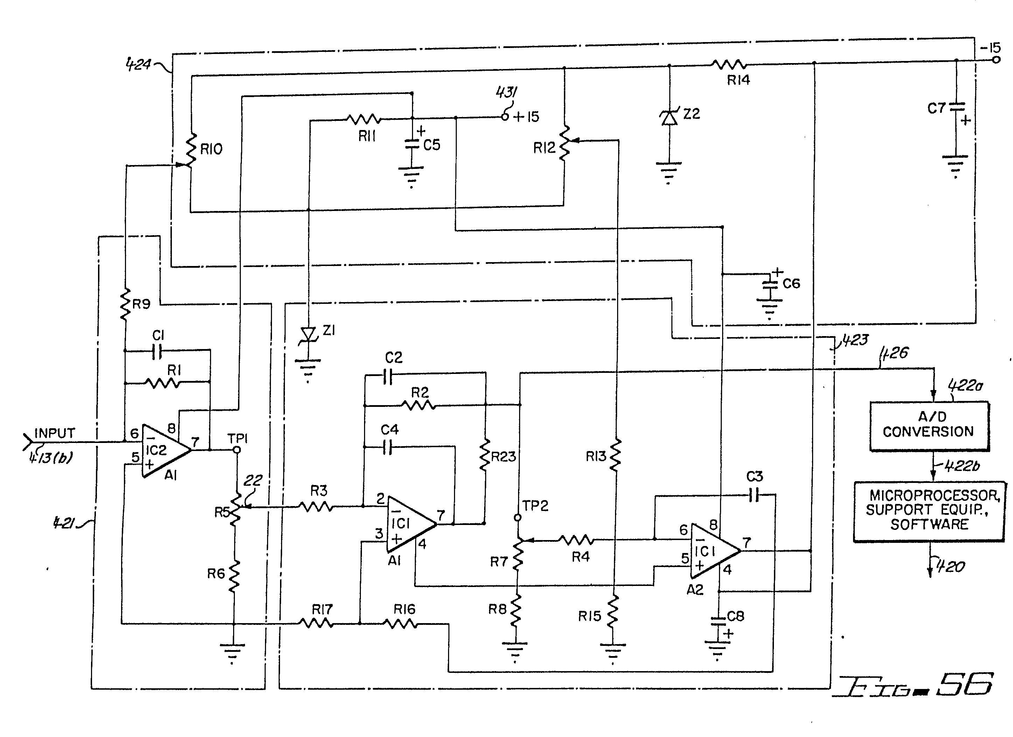

Fig. 17 shows in greater detail a system for measuring aircraft structural integrity which is a special adaptation of the general system illustrated in Fig. 4 are, as shown in Fig. 19, individual units for each sensor consisting of power supplies 117, voltage followers 118, and signal amplifiers 119. The power supply provides conditioned power to the sensor and powers the signal processing electronics. The voltage follower converts the sensor output to a buffered analog voltage signal. The signal amplifier amplifies the signal from the voltage follower.

The analog to digital converter either individually or collectively converts the analog information from the sensors to a digital format compatible with that required by the computing, processing, recording, edition and display units. Basically, the A-D converter samples the analog signal 120, holds the sampled value as a constant voltage 121 and converts the voltage level 122 to binary data.

The data processing computer 123 is a single frame computer capable of accepting the digital data 124 and manipulating it in a predetermined programmed fashion to convert the digitized data into a representation 125 related to aircraft or engine structural integrity. The output 125 may include information concerning the existence of cracks, the severity of the cracks, the loads experienced by the aircraft, the load history, the fatigue lifetime of the structure, the integrity of engines or engine mounts, the vibration signatures and other information involving aircraft or engine structural integrity.

The data recording and editing device 126 provides for permanent recording of all or part of the acquired data 125 for use at a later time and, additionally, provides the capability to manually edit the acquired data.

The data display and keyboard device 126 provides a visual display of either the data 125 acquired from the computer 123 or of the recorded edited data 128 from the data recording and editing unit. Additionally it provides, by means of feedback loop 129, for predetermined alteration of the means by which the data processor 123 is transforming acquired data 124 or, by means of feedback loop 130, the manner in which the data 125 is recorded, edited, displayed or digitized. The keyboard 127 is for data/command entry to the system.

a) Structural Failure Monitoring

There are essentially two independent methods of detecting incipient failure of the structure. The first method involves measuring the frequency response and/or compliance of a structure and its variability with time. The second method involves measuring the seismic waves in the structure induced by cracking or other structural failure.

Most aircraft structures can be considered to be nearly elastic systems. Even structures formed with composite materials have vibration characteristics which are well defined and repeatable. It is known, both analytically and experimentally, that the natural modes of vibration of a structure are distinct, well-defined and a function of the physical dimensions of the structure and the internal properties of the material. Any changes in these factors will change the natural frequencies and the associated vibrational modes of the structure.

Certain characteristics of the aircraft which change slowly over its lifetime, such as elasticity of the various structural members, may be initially calibrated by observing deflections under ground test conditions and thereafter continuously monitoring the vibrational mode frequencies and shapes. In accordance with the invention, impending structural failure can be observed by monitoring the changes in these mode shapes and frequencies. Further, shock waves from very small crack propogation centers can be easily detected.

Initial calibration of the aerodynamic coefficients may be accomplished by flying aircraft on specifiable paths, such as high speed taxi runs and take-offs that terminate in a landing on the same runway, optionally in opposite directions to eliminate effects of wind, after performing such prescribed maneuvers as stalls, turns and high-speed passes. Changes in aerodynamic coefficients due to environmental conditions, such as rain or ice, are then observed as changes in deflections without associated changes in elasticity (as observable through structural frequency of the natural modes). Rapidly changing variables such as aircraft mass is initially calibrated by observing deflections of the landing gear, suspension points on the ground, and thereafter estimated by counting engine cycles and observing changes in mode shapes and frequencies associated with fuel depletion.

With these techniques, the components structural deflections which may have aerodynamic (life, side force and drag), inertial (g loading), thermal loading, engine vibration loading, transient aerodynamic loading, operation of aircraft subsystems (i.e. drag brakes, landing gear, flaps and engine controls) can be effectively separated.

With information sensed from the SMD sensor system, the changes in the frequencies of the natural modes of the structure due to changing physical dimensions and internal material properties will be determined by the microprocessor.

Each structure will have a distinct set of natural frequencies and will have a well-defined impulse response when the structure is new, unfatigued and has no existing cracks. When changes occur, such as cracking or fatiguing, the impulse response will change due to changing natural frequencies of the structure. Thus, continuous identification of either the impulse response or equivalently the frequency spectrum of the structure allows for identification of structural changes of appreciable size.

To implement active crack detection in an air vehicle that has been optimized for strength-to-weight ratio, where many components operate near the structural limits, requires an alternate real time approach. In such aircraft, the materials used such as aliminum, fibreglass and advanced composites, fatigue can readily reduce the useful life of the aircraft. If such an aircraft is subjected to inadvertent adverse loads or the structure material has unsuspected material defects, the onset of structural failure may occur with a catastrophic discontinuity. The early signature of such a failure may be manifested in exceedingly small cracks in the structure which can result in structural failure in relatively short order. The prior art procedure for crack detection in aircraft involves visual and/or electronic inspection of the aircraft on the ground. Since extremely small cracks are of great significance in these types of structures, inspection procedures are mostly costly and relatively ineffective.

According to the invention, these exceedingly small cracks are detected as they occur in flight by taking advantage of the fact that the formation of cracks involves a substantial release of strain energy. The release can be detected by the SMD sensor and, when processed by the micro-processor, the occurrence of the crack can be separated from the inertial and aerodynamic forces simultaneously inducing the observed structural deflections.

Cracks occur in a material in an attempt to relieve the stress created by incident forces. This results in a release of strain energy. This energy is expended in essentially two forms: 1) the formation of the surface of the crack, and 2) the kinetic energy for crack propagation.

It is well-known that the crack velocity is significantly less than the velocity of sound in the material. For example, in aluminum, the crack velocity is no more than 3/10 the speed of sound in the material. Therefore, if a crack propagates only a short distance, the acoustic fault has already been transmitted through the structure and is sensed by the SMD sensor means. This phenomenon is similar to an explosion in the air where the shock wave propagates much faster than the explosive products.

Materials, such as glass at room temperature, undergo brittle fracture. The same is not true of metals, for instance, which are capable of deforming by slip and twinning even at very low temperatures. It has been observed that even when a metal fails by brittle cleavage a certain amount of the plastic deformation almost always occurs prior to fracture. Metals therefore do not fracture as a result of pre-existing cracks but, in many cases, by cleavage cracks nucleated as a result of the plastic-deformation process. Present theories favor the concept of

0067531

- 29 -

dislocation interactions as inducing cleavage nuclei. Dislocations on different slip planes can combine to form new dislocations on the fracture plane, thereby opening a crack. Alternately, slip on a given plane can be impeded by some sort of barrier leading to a pile-up of dislocations which, in turn, nucleate a crack. An obstacle to slip must be very strong so that it can stand the high stress at the head of the dislocation pile-up. Deformation twins and grain boundaries are obstacles with sufficient strength to stand the high stress.

Therefore, in materials such as metals, energy is lost due to plastic deformation in addition to crack formation. When slip takes place during the movement of a crack, energy is absorbed in nucleating and moving dislocations. If the energy required to overcome plastic deformation becomes too large, the crack may decelerate and stop. Thus, detection of these cracks after they occur is a very difficult task. At the instance of crack occurrence, however, energy release will excite lightly driven frequency modes and drive acoustic waves within the material. Because of the broad frequency response of the SMD, it can easily detect this energy release. Because of the sharpness of the pulse, time of arrival techniques can be used to ascertain the approximate location of origination of the acoustic pulse.

b)  Vibration Monitoring

The concept of monitoring the vibration signature of a mechanical system for an indication of the mechanical health of the system is well established. Every operating mechanical system has a distinct vibration signature which is produced when the system is operating properly.

When a malfunction occurs the signature changes.

Appropriate observation and analysis of the vibration signature can therefore provide an early indication of the severity and location of possible trouble and can help to prevent costly catastrophic failure.

The actual vibration signature of an aircraft contains many frequencies. This is a result of different components vibrating at various discrete frequencies and various mechanical resonances and nonlinear combinations of those signals in the machine. The resultant signal at a measurement point is therefore a complex vibration wave form which must be processed to reduce it to its discrete frequency components for analysis.

A typical prior art vibration monitoring system consists of sensors (vibration transducers), a signal processor (monitoring system) and suitable displays or alarm generation devices. The sensors commonly in use are the piezoelectric accelerometer and the inductive velocity transducer. While there is limited agreement on the specific crossover frequency, there is general agreement that vibration severity is proportional to velocity at relatively low frequencies and proportional to acceleration at high frequencies. Thus, the applications of the piezoelectric and velocity transducers are naturally separated by frequency. In addition, velocity transducers are generally rugged, operate over wide temperature ranges, produce relatively high signal to noise outputs, but are limited to about 1000 Hz. Piezoelectric accelerometers are more sensitive to contamination. Both have frequency ranges which are significantly influenced by the method of attachment to the machine.

Both the velocity transducer and the piezoelectric accelerometer respond to displacements perpendicular to their mounting surface. The structural moment detector (SMD) however, measures the difference between planes perpendicular to the surface to which it is mounted, that is, the measurement motion is $90^{O}$ to that of other sensors.

The significant point is not that suitable mountings will permit direct replacement of velocity transducers, strain gages and piezoelectric accelerometers. The significant point is that the SMD responds to transverse and longitudinal waves in a body which cause the surface to deflect as little as $3.5 \times 10^{-9}$ radians across the 1.5 inch length of the sensor (a surface displacement of $5.3 \times 10^{-3}$ microinches). This is a new and unique measurement and it provides new information for vibration monitoring systems, especially suited to aircraft structural integrity systems.

In the measurement of these ultra small deflections, the SMD has a frequency response which is essentially flat from 0 to 40 kHz. Combinations of velocity and acceleration sensors in the best vibration monitoring systems currently in use, provide a flat response from 0 to 20 kHz only.

c)   Aircraft Load Measurement.

Another application of the systems of the present invention is the direct measurement of the ability of various aircraft structural members to carry a specific load. The output of the structural moment detector is

$$O_{FRS} \ = \ \frac{1}{EI} \ \int f(loading) \ dx$$

where $\frac{1}{EI}$ is the effective flexural rigidity of a member of the aircraft structure and f(loading) indicates the local bending moment due to the loading on the structural member. The ability of the structural member to carry its design load can be assessed by imposing a known load which is small relative to the design load on

0067531

- 32 -

the structure and using the output of the SMD to determine the flexural rigidity of the structure. Changes in the ability of the structural member to carry its design load result in changes in the flexural rigidity of the member and these changes can be translated into an indication of the severity of the change. This measurement makes use of the static (IX) output of the SMD.

According to the present invention, the inverse of the above described operation is used to measure the actual load imposed to an aircraft structural member. If the flexural rigidity is known, then the sensor output is directly related to the load.

With appropriate signal processing it is possible to frequently evaluate the flexural rigidity of the member using autocorrelation techniques and then use that value of flexural rigidity to determine the existing loads. Thus, knowing both the load carrying capability of the member and the actual load, it is possible to predict impending failure.

d)  Altered Structural Capability Measurement

According to this embodiment of the invention a system is provided for assessing the structural capability of an aircraft or other structure which has been purposely  modified or repaired or which has altered capability as a result of the accumulation of ice, wind damage or other environmental effects. This system uses the unique measurement of the SMD to infer the existing flexural rigidity of structural members.  This measurement is then compared with design values and an assessment is made.

In one implementation of the system the sensor is mounted on a beam which has fractured and has been repaired by welding.  The SMD output is processed to

0067531

- 33 -

provide the flexural rigidity of  the welded beam. This value is compared with the value of the unfractured beam to determine if the repair has returned the structure to its original strength.

In another implementation the sensor is mounted to a beam whose strength has been increased by the addition of other members.  The SMD output is processed to provide the flexural rigidity of the strengthened beam.  This value is then compared with the design value to see if the desired strength has been achieved.

Yet a third implementation  is depicted in Figure 18.  The SMD 131 is mounted near the leading edge of the airfoil 132.  The SMD output is processed 134 to determine flexural rigidity.  The value obtained differs from the design value as a result of the accumulation of ice 133.  This difference is used as an indication to the pilot that his airplane wing has an accumulation of ice.

e)   Structural Integrity Assessment Systems for
     Helicopters

According to this embodiment of the invention, a system is provided for assessing the structural integrity of helicopters.  In this embodiment, certain aspects of the aircraft structural integrity systems, described  above, and of other load and structural measurement systems, described below, are combined to produce a system tailored especially to the unique requirements of measuring the structural integrity of a helicopter structure.  Helicopter structures present unique problems because of the relatively low frequency but large amplitude of rotation and vibration of the helicopter rotor system.

Technical failures, involving materials or components, which result in helicopter accidents include failures of: (1) power plant (2) power train (3) driveshaft (4) rotor blades and (5) rotor hubs. Primary causes of failures include incorrectly fitted parts, high stress concentration and cyclic excitation resulting in fatigue.

According to this embodiment, a plurality of sensors are mounted throughout the helicopter. Signal processing techniques, including adaptive filtering and adaptive noise cancellation techniques are used to separate the background noise from crack initiation and propagation signals. In addition, vibration signatures of the major components mentioned above are monitored. Any significant changes are used to assess structural integrity.

One mode of implementation of the invention is shown in Figure 19. SMD sensors 135 are mounted near rotating mechanical parts and along main structural members. The sensor outputs are fed to the electronics, microprocessing and recording unit 136. The data is processed according to the preprogrammed instructions and appropriate information is then displayed 137 to the pilot and/or recorded for use by maintenance personnel after landing.

Other Structural Integrity Systems.

The basic measurement techniques and systems for assessing structural integrity of aircraft can, with appropriate modification, be applied to measure the integrity of many other structures.

a) Space Vehicles

According to this embodiment of the invention, the aircraft structural integrity systems, described above, are applied to the unique requirements of space vehicles.

In particular, the large change in total mass of rocket powered vehicles during rocket burn introduces significant changes in the structural modes of the vehicle. As a result, thrust magnitude and direction are often actively controlled to compensate for these changes. The sensitivity of the SMD systems permits measurement and interpretation of changing structural parameters.

Another factor unique to space vehicle integrity is the zero g environment. The interpretation of structural information as the vehicle goes from one g loading through the high g loading during launch or maneuvers and then to the zero g of orbit requires more advanced techniques.

Thus, this embodiment of the invention uses all of the previously described techniques associated with the aircraft structural integrity systems described above and modified techniques and hardware to produce a system which provides information on loads, fatigue lifetime, crack initiation and propogation, etc. suitable for evolution of structural integrity of space vehicle.

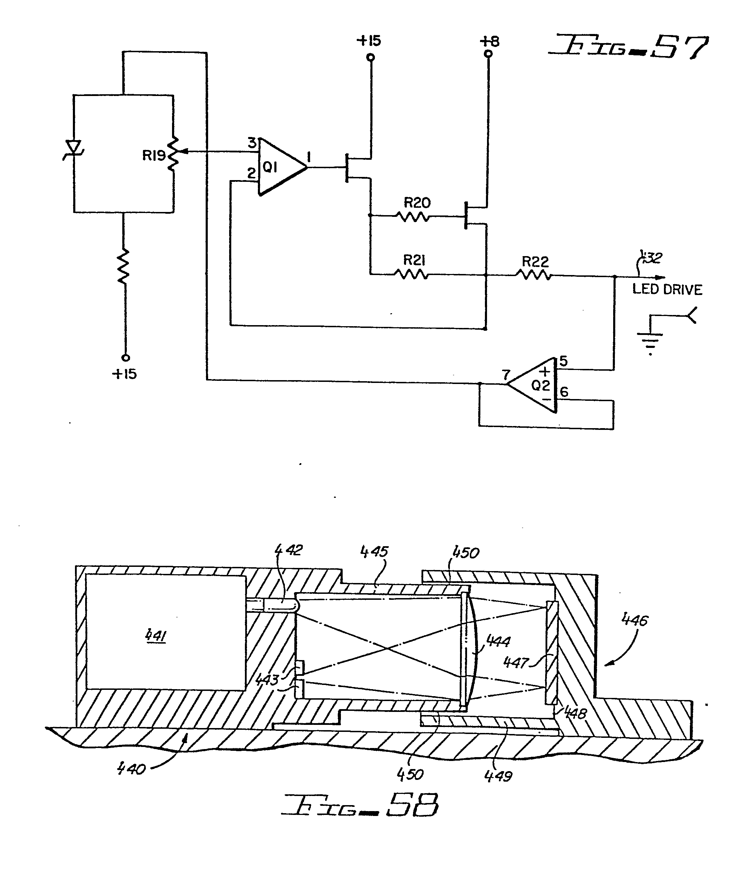

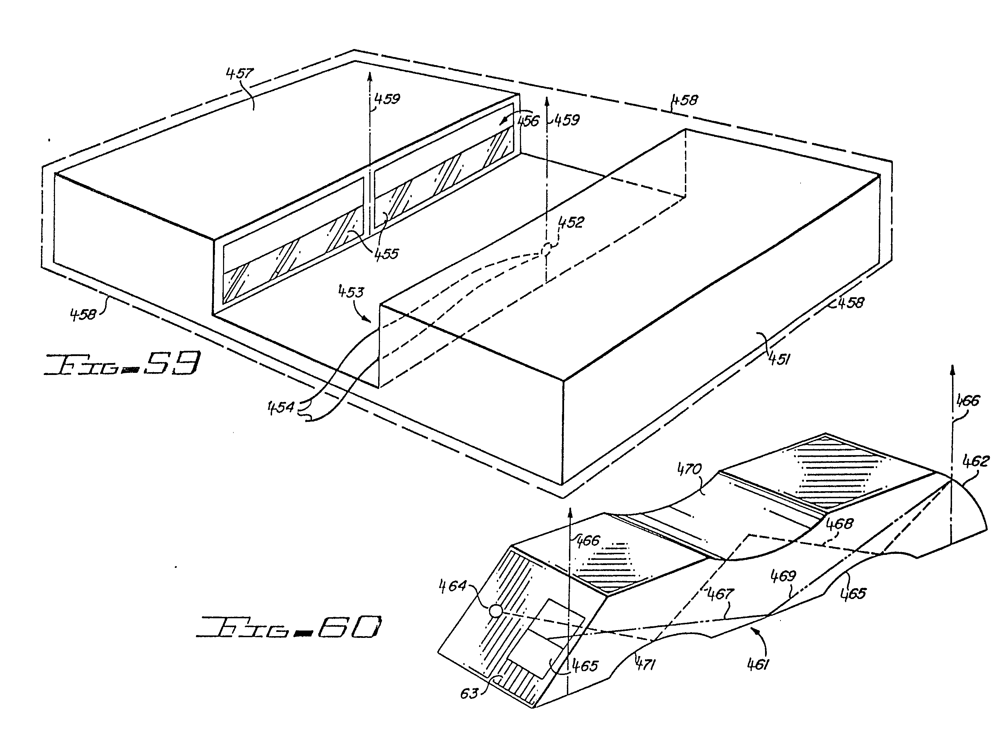

Implementations are illustrated in Figures 20 and 21.

Figure 20 depicts a space booster implementation which includes the SMD sensors 140, strategically mounted on the booster structure, provides signals to the processing and display electronics 141. The processed signals 142 are provided by telemetry to ground stations 143 and command signals from the onboard processor 141 are provided to the active thrust controller 144 of the booster.

Figure 21 depicts an implementation of the systems for assessing the structural integrity of the spacecraft 145 in which the sensors 146, strategically located, provide signals to the processing and display electronics 147 carried on board the spacecraft.

b) Buildings

According to this embodiment of the invention, SMD systems, including associated signal processing and electronics, are used to assess the structural integrity of buildings.

The current technologies used in the design of buildings have been developed over a long period of time without the assistance of an active structural information feedback system. This has resulted in the incorporation of a "Factor of Safety" in the design philosophy in order to account for the uncertainties in predicting the ability to adequately withstand the design load. As a consequence of this practice, most buildings have an extreme amount of "over design" which is directly reflected in higher capital costs.

One of the reasons this practice evolved was the lack of an adequate and reliable structural load measurement sensor and concept that could directly determine the physical parameters of interest. In other disciplines, such as aircraft and spacecraft design, overdesign is unacceptable and structural analysis and laboratory testing techniques have been developed into a fine art in order to minimise the uncertainties and allow a "Factor of Safety" of near unity. In the past, because of excessively high costs, such analyses and laboratory testing have not been cost effective for the design of buildings.

According to this embodiment, it is now possible to provide an accurate measurement of the ability of any structure to carry its design load. This can be done both during laboratory testing and in the actual building in real time. This allows two new important concepts to be introduced in the industry and forms the basis of this embodiment of the invention.

First, this embodiment provides a continuous active measurement of the ability of the structure to carry both its actual and its design load. This permits assessment of structural capability before and after a potentially harmful major event, such as an earthquake. It also allows for the assessment of such capability during and after building construction and during the normal course of building operation. Secondly, this embodiment allows for the exact mathematical modelling and laboratory testing of scaled models of potential new designs. This laboratory testing permits the design of a building with a lower "Factor of Safety" with the associated significant reduction in initial capital and labour cost. In fact, such a cost-effective design can be verified when built by use of the active system measurements provided by the invention's measurement array.

The invention uses the SMD to directly measure a structural member's ability to carry a specific load (the flexural rigidity of the structure). The output of the SMD is

$$O_{FRS} = \frac{1}{EI} \qquad f \text{ (loading) } dx$$

where $\frac{1}{EI}$ is the effective flexural rigidity of the structure and f(loading) indicates the local bending moment due to the structural loading. Assessment of the structure's ability to carry its design load is accomplished by imposing known load (small relative to the design load) on the structure and using the output of the SMD to determine the flexural rigidity of the structure. Changes in the ability of the structure to carry the design load result in changes in $\frac{1}{EI}$.
This is then translated into an indication of the
severeness of the change.

In this embodiment, the inverse of this operation
will also be used.  If IE is known, then the sensor
output is directly related to the load.  With appropriate
processing, it is possible to frequently evaluate EI
using autocorrelation techniques and use that value
of EI to determine the existing load.  Thus, knowing
both load carrying capability and the load,  it is
possible to predict impending failure.

As shown in Figure 22, according to this embodiment
of the invention, the SMD sensors 150 are located at
critical points throughout the building structure 151.
The signals from the sensors 150 are then fed to the
electronics 152, A-D converter 153, signal processor
154 and display/recorder components as previously
described.

c)  Bridges

This embodiment of the invention provides a system
for assessing the structural integrity of bridges.

The ability to detect deterioration in structural
members prior to the deterioration affecting the
integrity of the structure is of vital concern to the
engineering community.  For example, a major portion
of the highway bridges built in this country are
approaching their expected service lives. Visual
inspection is the only inspection technique which is
currently in general use.  The obvious shortcomings of
visual inspection has prompted the development of
other non-destructive  evaluation techniques. However,
the techniques studied to date have primarily relied
upon accelerometers to monitor the dynamic response
of structures to in-services loads.  Accelerometers respond to both the rigid body and the flexural motions of the structural member on which they are mounted. Therefore, the measured signal tends to mask changes in the structural signature resulting from changes in the flexural rigidity of the structural member.

The SMD is only sensitive to flexural motions. Since it discriminates between rigid body and angular motions in the dynamic response of a structural member, it is capable of accurately detecting changes in the flexural rigidity. Thus, this embodiment provides a non-destructive technique for evaluating the structural integrity of structures under actual field conditions.

This embodiment thus provides a systematic, automated, and reliable non-destructive method of monitoring the integrity of civil engineering structures under field conditions. The benefits of monitoring the performance of our ageing bridge inventory is obvious both in terms of cost and potential savings in lives.

Figure 23 illustrates an application of this embodiment. Structural moment detectors 160 are located on either the top or the bottom of the centre span of a typical single span suspension bridge 161. For multiple span bridges, sensors 160 would be, likewise, located in the centre of, and on either the top or bottom of, structural members of the other spans. As a cost effectiveness tradeoff, the electronics and signal processing package could be located at a central location or self-contained packages could be located at the centre of each span. In any event, the electronics and signal processing hardware would be essentially the same as that disclosed in Figure 4.

d) Ocean-Going Vessels

This embodiment of the invention provides a system for assessing the structural integrity of ocean-going vessels.

Although the shipping industry ranks as one of the oldest means of transporting mass goods, ever-increasing demands have required the industry to push technology to its limits. One of the primary consequences in recent years has been the development and use of very large ocean-going vessels. Because of the extremely large capital investment represented by these vessels, the importance of the cargo, and the high costs associated with the accidental loss of the cargo or its delay in arriving, the potential benefits that could be gained by a real time assessment of the structural integrity of the vessel are quite significant. Within the U.S.A. technical environment, the Ships Structure Committee, American Bureau of Shipping, various sea shippers and technological industrial concerns have initiated numerous structural programs in order to acquire engineering design data which could be used to improve the design of large ocean-going vessels. Only within recent years have there been attempts to provide real time assessment of structures, none of which were ocean-going vessels. One of the major reasons for this has been the lack of adequate concepts and sensors that have the reliability and dependability required in the environment of intended use. With the development of the SMD and the associated electronics and processing techniques, it is now possible to provide a real time assessment of the ability of a structure to handle the load it is experiencing and provide an active indication of when this capability has changed.

Structural integrity assessment for ocean-going vessels consists of two distinct requirements; the structure itself and the propulsion system. With regard to the structure there are three basic objectives.

The first concept is the prediction of the load carrying capability of the structure. The unique measurement of the SMD permits a direct determination of the structure's flexural rigidity. Thus, if this determination is made and continuously compared with the design value, any change can be used as an indication of a potential structural problem and can be immediately inspected and evaluated. In this way the ability of the structure to carry its design loads can be continuously assessed.

The second objective for the structure itself involves the active detection of cracks. The energy released during formation and propagation of a crack excites frequencies within a structure which are detected by the SMD. With suitable processing of the signals from an array of sensors, the occurence, the location and the severity of the cracks are determined. This permits an assessment of their relationship to structural integrity.

The third objective involves the measurement and recording of the load history experienced by the ship structure. If this information is compared with the design environment an assessment of the remaining lifetime can be made.

With regard to structural integrity of the propulsion system, every machine has a characteristic vibration signature when it is operating properly. Changes in this signature can be used to predict failure and/or to provide warnings which permit maintenance and repair prior to failure. The SMD, associated electronics and processing are used in this fashion to assess the mechanical health of the propulsion systems.

The invention consists of an array of SMD's, appropriate electronics, processors, recorders, and displays as depicted in Figures 24-25.

Figure 24 depicts the layout of the propulsion system within the hull of a typical cargo vessel. Structural moment detectors 165 are attached at appropriate places to the underwater portion of the hull 166 as well as the superstructure 167. Additionally, structural moment detectors are attached to the engines 168, spring bearings 169, forward stern tube bearings 170, aft stern tube bearings 171, propeller strut bearings 172 and the rutter stock 173. As shown in Figure 25 the output of the sensors 165, including those attached to the propulsion system components as shown in Figure 24, is provided to the electronics and signal processing package 166 located in the deckhouse 167 which, in turn, provides processed signal information to the display package 168 on the bridge 169.

e)   Offshore Platforms

This embodiment of the invention provides a system for assessing the structural integrity of offshore platforms.

Offshore structures installed in hostile waters such as the North Sea, the China Sea, and the waters near Australia and New Zealand can be subjected to structural loadings far exceeding those experienced in the Gulf of Mexico. Several studies have dealt with the analysis and design of these structures for structural integrity (fatigue loading, earthquake loading, and wave loading). These efforts concentrate on determining the stress-concentration factors at the nodes of the frame structures. Such efforts result mainly in the structural design of offshore platforms with large safety factors for structural fatigue. Little, if any, effort is expended to determine real time estimates of the structural forces or the ability of the structure to continue to carry its load when the platform is in use. If a system for obtaining such estimates were available, the estimates could be used to provide design feedback to the structural design process, real time assessment of the structural integrity, and advanced warning of incipient failure.

The primary reason for the absence of such a system is the lack of reliable, accurate instruments and associated components to provide the structural information necessary for assessment of structural integrity. The most recent attempt in this area uses acoustic detectors that quantitize the acoustic energy levels. Unfortunately, these systems have high equipment costs, low production yields, and marginal fire risks. In addition, they measure a physical parameter that is not directly related to structural integrity.

Offshore platform structural integrity assessment involves at least three basic objectives. The first objective is an assessment of the remaining fatigue lifetime the structure possesses. If the initial distribution of flaws is known or assumed from statistical information; and information relative to critical crack lengths, crack growth mechanisms; etc. is known (or assumed from statistical information), then if the load history applied to the structure is measured, an estimate can be made of the remaining fatigue lifetime. This can also be accomplished through interpretation of the changes in natural frequency of the structural members or through direct measurements of flexural rigidity.

The second objective is to measure failure mechanisms in the structure itself. If cracks are detected as they occur, and if one acquires information on crack growth in real time on the structure, then an assessment of the severity of a crack can be made as it occurs.

The third objective is simply to observe the point at which the structure exceeds its design loads. For loads above some limiting value, inspections are required. This invention addresses all three of these concepts.

The structural moment detector directly measures the flexural rigidity ($\frac{1}{EI}$) of the member on which it is mounted. Hence, the measurement is a direct measure of the ability of the structure to carry its load or a design load. When used in a dynamic measurement mode, the SMD can provide a direct measurement of the natural frequency of the structure to which it is mounted. This allows for a direct measurement of incipient buckling (natural frequency approaching zero) or a measurement of tension fracture (natural frequency increasing above specified limit). In addition, appropriate signal processing equipment provides a direct measurement of the structural transfer function between multiple points of the structure allowing for the identification of changing structural characteristics.

Thus, this embodiment of the invention will provide for monitoring the condition of the structure in real time, continuously, with a permanent record and a prediction of the remaining lifetime of the structure.

The system replaces as many conventional sensor systems as possible and thus standardize the various instrumentation systems currently utilized.

The information provided by this system will provide:

1. Failure Detection and Warning
2. Determination of Load Bearing Capability of Structural Members
3. The Detection and Location of Remote Cracks
4. Design Criteria and Validation

Because of the unique environment and structural requirements of offshore platforms, this embodiment
of the invention also has the following characteristics:

1. Unambiguous warning of structural failure.
2. Automatic monitoring techniques not requiring
   access.
3. Reliable operation under the most severe
   loading (weather) conditions.
4. Non-interference with normal operations.
5. Minimization of undersea installations,
   inspection, maintenance and repair.

Referring to Figure 26, these characteristics are
provided by attaching an array of sensors 170 to the
platform 172 above the waterline 171. These sensors
170 are coupled with an electronics-data processing-
display package 173 to enable the system to detect
and locate crack initiation and propogation despite
a random noise environment. The noise rejection or
discrimination is provided by adaptive digital
filtering techniques.

(f) Dams

This embodiment of the invention provides
a system for assessing the structural integrity of dams.

More specifically, for earthen dams the system
consists of a plethora of SMDs mounted on rectangular
diaphragms and imbedded in the dam. The output of the
SMD in this configuration is a direct measurement of
soil pressure. Thus, any change can be interpreted
in terms of the depth of water behind the dam. This
information is then assessed for structural integrity.

For existing concrete dams SMDs are mounted on the
water side of the dam. The output is directly related
to the flexural rigidity of structure and therefore the
load carrying capability of the dam. In this configuration the output is also monitored for seismic pulses indicative of crack initiation and/or settling.

For new concrete dams SMDs are mounted internally on reinforcing steel at critical locations of the dam.

One mode of implementation is depicted in Figure 27. Diaphragm mounted SMDs 181 are positioned in the earth and standard SMDs 182 are positioned on the concrete centre wall. The sensor outputs are fed to the electronics, microprocessor module 183 and processed according to preprogrammed instruction. The data is then appropriately recorded and/or displayed for interpretation.

g) Pipelines

This embodiment of the invention relates to systems for examining and assessing the structural integrity of pipelines and determining the existence and location of flaws.

In recent years weld failures on gas distribution pipelines have emphasised the need to have inspection techniques to locate major flaws in high stress regions of pipeline systems. Current inspection techniques involve acoustic emission. In one technique 30kh resonant vertical sensitive piezioelectric accelerometers mounted above ground on 1.6 cm diameter steel rods with hardened tips which contact the buried pipe were used to sense acoustic emission caused by loading the pipe by driving heavy vehicles across it. Sensors were required approximately every 61 meters. In another technique an electro mechanical pig is inserted in the pipeline and carried along by the fluid. The pig sends signals through the pipe and records reflections from flaws. Both methods are extremely time consuming and expensive.

The present invention mounts SMDs along the pipeline.

The distance between sensors is 100 yards to 2000 yards. The system uses both DC and AC characteristic of the SMD. In the DC mode the SMD measures the flexural rigidity of the pipeline. A change in flexural rigidity indicates the existence of flaws and shows that a more detailed inspection is appropriate. In the AC mode the SMD detects seismic energy propogated through the pipe as the result of crack initiation and growth. Time of arrival at sensors on either side of the crack is used to determine location. Implementation of the system is illustrated in Fig. 28.

A crack 191 causes seismic energy 192 to propogate along the pipe 193. The signal reaches SMD 194 first and later SMD 195. Information is sensed and then processed and recorded by the electronics and microprocessor package 196 co-located with each sensor. Final processing and crack location is accomplished after data collection from each sensor location. This may be done manually or by hand wiring each sensor package to a central computer.

If the pipeline is subjected to a known heavy load, for example, by placing a loaded heavy truck at predetermined points along the pipeline, the sensor output can be used to determine flexural rigidity of the pipeline. Any change in this value during subsequent tests would indicate a change in the ability of the pipeline to carry that load and hence a potential flaw.

This invention improves the current technology by:

(1)    permitting increased distance between sensors
(2)    extending the frequency band to 0-50 KHz
(3)    making unique measurements of flexural rigidity
(4)    providing active crack detection.

In addition, the SMD systems may be used to measure the stress in the pipeline resulting from shifts in the covering and supporting soil which may occur due to floods, earthquakes, etc. This provides a direct method of assessing the effects of fortuitous events on pipeline integrity.

(h) Land Vehicles

This embodiment of the invention relates to systems for assessing the structural integrity of land vehicles, including automobiles, trucks, tracked vehicles, heavy construction and mining vehicles, military vehicles, etc.

The system provides information concerning structural fatigue, active crack detection, overload conditions, load history, and vibration for the purpose of assessing: (a) the structural loads on the vehicle, (b) the remaining lifetime of a vehicle, (c) the conditions of components of the vehicle, (d) the operational history of the vehicle and (e) the current ability of the vehicle to carry its design loads and/or for providing more effective and efficient maintenance and/or test procedures.

The ultimate function of this system is to prevent catastrophic structural failure of a vehicle through structural integrity assessment.

Structural integrity assessment involves at least three basic objectives. The first is an assessment of the remaining fatigue lifetime the structure possesses.

The second objective relates to the occurence of failure mechanisms in the structure itself. If cracks can be detected as they occur, it is possible to acquire information on crack growth in real time on the vehicle.

The third objective is simply to observe the point at which the vehicle exceeds its designed loads. For loads above some limiting value, inspections are required.

Referring to Figure 29, the system as presently constituted consists of a number of SMDs 201 mounted at selected locations and properly oriented to be sensitive to the selected parameter to be measured. The SMDs 201 are connected through cabling 202 to the processing electronics (signal processing and buffering, A-to-D conversion, data processing, data recording and editing) package 203 and the output suitably displayed 204. The system functions by taking the unique measurements of the SMD and interpreting the output signals.

The system performs the following functions:

- Monitor structural cracks as they occur
- Assess the remaining fatigue lifetime of a structure
- Warn of impending failure of structures approaching design loads.
- Warn of impending engine and/or component machinery failure

(i) Pressure Vessels

This embodiment of the invention provides a system for detecting the existence and location of flaws in pressure vessels such as, for example, liquid natural gas tanks.

The initiation and growth of cracks in a pressure vessel is accompanied by a release of strain energy. This energy propogates through the material in much the same way that sound travels through the atmosphere. Properly mounted and tuned SMDs can detect the energy as it reaches the SMD locations. In the embodiment illustrated in Figure 30, a plurality of SMDs 211 are located on the surface of the LNG tank 212. The flaw 213 emits energy which is detected by the SMDs 211. The time of arrival is different at each SMD. Using time of arrival and pulse propogation speed, the processor 214 determines the location and severity of the flaw 213. This information is recorded and suitably displayed 215 for later interpretation.

(j) Railways

This embodiment of the invention relates to a system for assessing the structural integrity of railroad car wheels and railroad rails.

The system measures the vibration signature generated by the relative movement between the metal wheels and rails of railway systems, compares the generated signature with that observed when rails, wheels and under-carriage are known to be structurally sound and interprets the difference to assess the structural integrity.

In another mode of operation, the system measures the vibration signature which results from actively striking the wheels, rails, or undercarriage with a hammer or other device and compares the signatures as before.

The system consists of the SMD sensors suitably located and associated electronics, A-D converters, micro-processors, recorders and displays. These may be located at large distances (up to 1 mile) along the rails or may be attached to individual undercarriages (trucks) or near individual wheels.

One embodiment of this system is shown in Figure 31. SMDs 221 are attached to the rails and monitor the vibration which is generated by each wheel 224 as it passes. The electronics and processing package 222 counts the wheels, and the display/signalling package 223 indicates and records any wheel which produces a vibration signature revealing a flaw.

Another embodiment of this system is presented in Figure 32. SMDs 225 are mounted on each individual truck and continuously monitor the vibration signature of the wheels 226 mounted on the truck 227. The signals from the SMDs 225 can either be fed to electronics/processing packages 227 or display/ signalling devices 228 mounted on each truck, or the packages 227/228 can be centrally located to monitor the output of a plurality of sensors 225 and generate appropriate alarm signals indicating the need for closer inspection.

A third implementation of this system is depicted in Figure 32a. SMDs 229 are attached to the tracks and used to detect the vibration signature of seismic energy propogating through the rails as a result of a calibrated impulse 230 applied to the rail 231. Significant changes in the output of the SMD 229 are sensed by the electronics/processor package 232 and displayed 233.

## APPLIED STRUCTURAL MEASUREMENT SYSTEMS

In addition to performing basic measurements and assessing the integrity of various structures, described above, the SMDs are provided, in accordance with yet another aspect of the invention, in systems which utilize components of a building structure itself to effect communications and systems which indicate the status of certain portions of a building such as, for example, unauthorised entry into a building or portions thereof by an intruder.

### Building Intrusion Alarm System

This embodiment of the invention provides intrusion alarm systems for detecting entry of unauthorised persons into a defined secure area within a building structure.

These intrusion alarm systems employ a structural moment detector to generate intrusion signals which are transmitted to a control centre where the alarm signals are initiated.

The function of an intrusion alarm system is to detect an unauthorised entry into a defined secure area and to transmit this information to a specific control point. Specific advantageous characteristics of a security system are the ability to differentiate between human intruders and a potentially harmless intruders and a potentially harmless intruder such as an animal; the ability to minimise the number of false alarms; the ability to prevent an override or bypass; and the ability to operate during adverse environmental conditions such as power failure, electrical storms, and prolonged temperature variations. The security system can be considered to consist of three basic subsystems: (1) intrusion sensor; (2) the control centre; and (3) local and remote security systems.

Intrusion sensors are classified as either perimeter detectors or volumetric space detectors. Perimeter intrusion sensors essentially consist of different types of switches, such as the common magnetic switch, which are strategically located around the perimeter of the region to be secured. The other three most common perimeter devices are the mat switch, the metallic window foil, and the perimeter light beam. A more sophisticated perimeter intrusion sensor is the vibration switch which provides a signal when strong structural vibrations, such as hammering or sawing, are occurring. The most common disadvantages associated with the perimeter intrusion sensors are the fact that the devices are basically one or two dimensional and do not sense the entire volume to be secured, the

0067531

- 53 -

sensors are quite easily "jumped"electrically, and they usually require considerable wiring to implement.

The space intrusion sensor is designed to detect a violation of a volumetric region. The basic principle of operation of prior art space intrusion sensors includes the generation and transmission of a stable energy field throughout the volume which when disturbed by the entry of a human, causes a receiving device to generate an alarm signal. Such devices have a degree of invulnerability since one must pass through the secure area in order to come in physical contact with the equipment. Most of the volumetric intrusion sensors employ the physical principle known as the Doppler Shift. A large number of space-intrusion sensors have been developed which operate in various segments of the acoustic and electromagnetic spectrum (see Table 1).

TABLE 1 - PRIOR ART SPACE INTRUSION SENSORS

| Sensor Type | Method of Operation | Range of Operation | Comments |
|---|---|---|---|
| Audio Detection | Listens to sounds | 25 ft. radius | Blocked by walls, triggered by extraneous noises |
| Sonic | 4,000 to 9,000 Hz transmitted and received Doppler Signal | 25 ft. radius | Blocked by solid objects, triggered by moving objects |
| Ultrasonic | 15,000 to 40,000 Hz | 15-30 ft. radius | Same as sonic |
| Microwave | 915 HHz, transmitted and received Doppler Signal | 20 ft. radius | Will go through walls, blocked by metal, may trigger on extraneous radio transmissions,FFC certification required |
| Microwave | 2.5-10 giga hertz transmitted and received Doppler Signal | Up to 75 ft. | Go through most solids, interface with commercial radar systems, may be used outdoors |
| Infrared | Passive detector sensing heat changes | 15 ft. radius | Will not sense through solids, triggered on hot spots (sun,etc) |
| Stress | Resistive changes resulting from flexure in structural members | 15 ft. radius | Sensor mounted to structural members, less affected by extraneous noise sources |
| Capacity | Senses changed capacity in a tuned circuit | 2 ft. radius | Excellent short-range detection |
| Ambient Light | Light levels detected by photovoltaic cells | 10 ft. radius | Requires lighted area not subject to changes in outside ambient light levels |
| Closed Circuit TV | TV camera system | 50 ft. radius | Requires human observer |
| Seismic | Low frequency ground vibration | 50 ft. radius | Outdoor use primarily, may be triggered by environmental earth noise |

- 55 -

It is possible to use the other intrusion characteristics of matter such as charge, mass, reflectivity, and weight to construct a sensor. In all cases, the prior art space intrusion sensors either generate a field or sense the energy field generated by the intruder. In general, the range of these sensors have been such that numerous sensors had to be employed to cover reasonably sized protected areas.

One of the major problems with any security system is the minimisation of false alarms. False alarms can be generated by a wide variety of causes depending upon the operational mode of the detector. In order to attempt to minimise and eliminate false alarms, space intrusion detectors usually employ sophisticated electronic circuitry to process the basic intrusion signals received from the detector prior to giving an alarm signal. Such processing can take several forms. In Doppler systems, a velocity gate is sometimes employed which ignores all objects which are travelling at an extremely high or low rate of speed. Also, circuits which employ integration or event counting circuitry also help to reduce the possibility of false alarms. However, space intrusion detectors have a higher false alarm rate in general, due to the more sophisticated technology used.

In some cases, the signal detection and classification is not done at the locality of the sensor, but is done at the central location of the control centre. This is especially true when the control centre has some capability of performing decisions such as a small computer or microprocessor. The primary function of the control centre is to take the alarm signal and activate the necessary alarms and initiate the series of actions which must be taken in case the secure area is violated.

Once an intrusion has been detected by a sensor and processed by the control centre, it is necessary to activate alarms which indicate that the intrusion is in progress and it is necessary to activate other security systems located in the secure area such as audible alarms, automatic door locking mechanisms, lights, disabling gas injecting systems, etc.

Transmission of the intrusion signals from the secure area to the control centre and transmission of the alarm signals from the control centre back to the secure area to activate security systems therein is usually accomplished via electrical wiring communicating between the intrusion sensors and the alarm centre and between the alarm centre and the security systems. Such prior art communications between the alarm system components are often vulnerable to various disabling techniques and are, themselves, the source of possible false alarms.

It would be highly advantageous to provide improved intrusion alarm systems in which the intrusion sensors have improved range, selectivity, reliability, and reduced tendency to generate false intrusion signals.

Additionally, it would be highly advantageous to provide intrusion alarm systems in which the communications between the alarm system components are accomplished by means less vulnerable to tampering and which themselves have a reduced tendency to generate false intrusion or alarm signals.

An intrusion alarm system embodying the present invention and capable of supplying these advantages is shown in Figure 33.

Briefly, in accordance with this embodiment of the invention, there is provided an intrusion alarm-security system for detecting unauthorised entry of persons into a defined secure area within a building structure. Signals are generated in response to an intrusion to activate security systems in response to the intrusion signals. The system comprises at least one structural moment detector carried by a structural component of the building located within the secure area. The structural moment detector generates intrusion signals in response to the deflection of the structural member which is induced by changes of the loading on the member caused by an intrusion. Means are provided for transmitting the intrusion signals to a control centre and means are provided in the control centre for receiving the intrusion signals and for generating security system activation signals in response to the intrusion signals.

The operation and location of components of an intrusion alarm system incorporating the principles of the various preferred embodiments thereof are schematically depicted by Figure 33. As shown, a secure area 30 may contain a plurality of structural moment detectors (SMD's) 31 attached to various structural components of the building structure 32. The electrical outputs 33 of the SMD's 31 can be directly transmitted to the control centre 34 or, in accordance with the preferred embodiment of the invention, the outputs 33 of the SMD's 31 are supplied to transducers 35 which convert the electrical intrusion signals 33 to mechanical forces 36 which are applied directly to the building structure and the resultant mechanical intrusion signals 37 are transmitted through the building structure 32 to the control centre 34 where they are received by one or more SMD's 38 which produce secondary intrusion signals 39 which are transmitted to appropriate signal processing equipment 40.

The signal processing equipment 40 processes the secondary intrusion signals 39 in accordance with art-

recognised techniques to reject spurious signals and to perform other signal-processing steps, such as time-of-arrival analysis to indicate the point of intrusion, comparison of footprint "signature" of the intruder with footprint signatures of authorised personnel to determine whether the intrusion is unauthorised, etc. Upon identification of secondary intrusion signals 39 as legitimate and unauthorised, the signal-processing equipment generates alarm signals 42 which are transmitted to alarm-activation equipment 43. The alarm-activation equipment activates various control centre alarms and systems 44, various external alarms and systems 45 and various local security systems 46 located in the secure area 30. The activation signals 43a from the alarm activation equipment 43 can be transmitted electrically, directly to the local security systems 46 in the secure area 30 according to conventional prior art techniques. However, in accordance with a presently preferred embodiment of the invention, the activation signals 43a are applied to appropriate transducers 47 and converted to mechanical forces which are applied to the building structure 32 and transmitted therethrough as mechanical activation signals 48 which are received by activation signal receivers (SMD's) 49 located within the secure area 30, the output 50 of which is transmitted to and activates the local security systems 46 in the secure area 30.

As will be appreciated by those skilled in the art, the use of structural moment detectors as intrusion sensors provides significant advantages over conventional intrusion detector systems. Additionally, by coupling the sensors and the control centre with transducers and additional structural moment detector devices, the intrusion signals and activation signals can be transmitted between the system components without the necessity of wires or an electronic field.

Another Building Structural Communication  System

According to this embodiment of the invention, systems are provided for communicating between various parts of a building, using the building structure itself as the communications path.  The communication function, according to this embodiment of the invention, is accomplished by a coded mechanical impulse to the building structure, transmitting the coded impulse through the structure to a remote location in another part of the building and applying a structural moment detector to detect the deflection of the structure caused by the coded impulse.  The output signal from the structural moment detector is then processed to display and/or record the information contents of the signal.

For example, this embodiment of the invention can be used to effect two-way communication between the secure area and the control centre components of the building intrusion alarm system described above, thus securely transmitting intrusion signals through the building structure itself to the central control point and securely transmitting signals back to the secure area from the control point to activate system components such as automatic door locking mechanisms, lights, audible alarms, disabling gas injecting systems, etc., all shown in Figure 33.

APPLIED LOAD MEASUREMENT SYSTEMS

According to yet another aspect of the invention, SMDs are employed in systems for measuring the loads applied to various man-made and natural structures.

Vehicle Weight and Balance System

According to this embodiment of the invention, a system is provided which furnishes a real-time indication of the gross weight and location of the centre of gravity of cargo and/or passenger vehicles of all types. While the following description illustrates the use of systems of this embodiment to measure gross weight and centre of gravity of a cargo aircraft, the same system is applicable to all other vehicles such as cargo trucks, cargo and passenger ships, etc.

The air freight business is one of the primary sectors of the aviation industry. With each year, the number of air miles primarily flown for freight purposes increases significantly. Within the air freight operations, a primary task is the proper loading of the aircraft. In order to make optimum use of the payload capability and to ensure the safe operation of the aircraft, a precise knowledge of the total take-off gross weight (TOGW) and the location of the centre of gravity must be determined.

Currently, this information is obtained by a nominally slow process of manual weighing and analytical calculation. Each container is manually weighed separately with the weight data being entered on a data sheet. Upon completion of all weighing and loading of the freight into the aircraft, the centre of gravity is calculated. This method is subject to the typical errors of many similar computational processes, the most common being data misentry and mathematical errors in calculations.

There have been attempts to automate this process. These systems, however, apparently did not succeed due primarily to the difficulties in the method by which the distributed weight of the aircraft was measured. Fluidic pressure sensors located in the landing gear were subject to hysteresis and dead band nonlinearities. Hence, the system was not effective and has not been used operationally.

In a manner comparable to past systems, the system of the present invention is designed to automatically weigh a loaded aircraft without scales as well as to automatically determine the location of the centre of gravity. The system consists of two main subsystems: 1) weight transducers (SMDs) which are mounted on the structure near the weight support subsystem and 2) an indicator control box which is mounted on the vehicle control panel. The function of the system as applied to air cargo aircraft is to calculate in real time not only the aircraft take-off gross weight (TOGW) but also the centre of gravity of the aircraft in terms of percent mean aerodynamic chord (%MAC), or its lateral position.

Referring to Figure 34, the components of the vehicle weight and balance system of the present embodiment of this invention consist of structural moment detectors 201 mounted on or near each of the landing gear struts, and electronics-microprocessor package 202 which receives and processes the signals from the structural moment detectors 201 and indicator/recorder 203 which displays and/or records the processed data from the electronics-microprocessor package 202.

The system of Figure 34 functions as follows:

In modern aircraft, the landing gear forms a weight support system in which the supports are located at the apexes of a triangle. The total aircraft weight is distributed at these three points in some unknown manner. The two parameters which must be determined are the total weight, and centre of gravity in terms of the percent of the mean aerodynamic cord. The total weight calculation is the simple sum of the weights at each of the three points, i.e.:

$$TOGW = \sum_{i=1}^{3} W_i$$

where (1)

$W_i$ are the indicated weights at each of the three stations properly adjusted for unsprung weight.

The centre of gravity can vary in all three spatial directions. However, the geometry of the situation and the means of loading the aircraft and the method by which it is controlled require that the primary direction of the centre of gravity which is of interest is the motion along the longitudinal axis of the aircraft (roll axis). Using the weight distribution, the unknown centre of gravity location can be determined by the simple moment equilibrium equation about the centre of gravity, i.e.

$$x_{c.g.} = d_m - d_t \frac{W_N}{W}$$

where (see Fig. 35) (2)

$X_{c.g.}$ is the location of the centre of gravity in terms of mean aerodynamic cord.

$d_m$ is the distance of the main gear from the leading edge of the mean aerodynamic cord in units of mean aerodynamic cord.

$d_T$ is the total distance from the nose gear to the main gear in units of mean aerodynamic cord.

$W_N$ is the weight sensed at the nose gear properly adjusted for weight not seen by the sensor.

TOGW = W is the total weight of the aircraft.

Relationships (1) and (2) are then the two calculations which have to be performed on the measured data in order to determine the total weight and the centre of qravity location.

The high sensitivity and unique measurement afforded by the SMD make this system a marked improvement over previous concepts. The measurement itself is made without the need for the sophisticated electronics required for strain qauge instrumentation. Also, since it is the structural deflection which is being sensed, the problems associated with fluid pressures,etc. are avoided.

Crane Load and Structural Assessment System

According to this embodiment of the invention, systems are provided for real-time measurement of the load on a crane and the assessment of its structural integrity.

A plurality of SMDs are physically mounted to a crane structure. Measurements from the SMDs are converted into digital data by the electronics and subsequently into useful information by the microprocessor. The information is then presented as a visual display and/or recorded and analysed to provide a knowledge cf the current loading of the crane and predicted lifetime and/or decreased safe loading levels resulting from structural fatigue. This information is used both as a primary source for real-time control of loading operations and for safety verification prevention of overloads.

In another mode of operation, the system senses the natural vibration signature of critical members of the crane structure and through adaptive filtering identifies significant changes. These changes are then examined to determine their cause and an assessment of the effect on structural integrity is made.

In yet another mode of operation, the sensor is used to detect the load and to feed this information automatically to the control system. Thus, for example, if an offshore platform crane is being used to unload a barge in rough sea and the sea swells cause the barge to drop rapidly while a load on deck is hooked to the crane cable, the system would release the cable and prevent the sudden jerk which could break the cable.

In yet another mode of operation, the system is used to sense the actual load history on the crane as a result of environmental factors (wind, ice, etc). This information is subsequently used in design of similar crane emplacements and for updating empirical design formulas.

In yet another mode of operation, the system is used to actively detect the initiation and growth of cracks in the crane structure.

As illustrated in Figs. 36, 37 and 38, structural moment detectors 211 are attached at critical points of the crane structure. The output of these detectors 211 is supplied to the electronics and data processing package 212 and the processed signals from the package 212 are fed to display/recorder 213.

Geophysical Exploration System

According to this embodiment of the invention, SMDs are used in systems for geophysical exploration.

The specific purpose of this embodiment is to provide the geophysical exploration community with a significantly improved seismic instrumentation system. The invention is not limited to a sensor which provides better seismic information but includes additional improvements in the data processing software which are made possible by the use of the SMD technology. The existing geophysical models used in seismic data

- 65 -

processing and other portions of the current data processing techniques have evolved over a period of time and are the direct result of theoretical and empirical investigations. The seismic sensors with their varied characteristics have had direct impact on data processing construction. This invention is a seismological instrumentation system that provides the capabilities promised by "high resolution seismology".

The SMD seismometer replaces current systems. It has a greater reliability (no moving parts), a greater signal to noise ratio and provides measurement capabilities not found in conventional sensors.

As an example, a SMD system was taken to a well location which was to be fractured. It was mounted on a surface outcropping of rock by epoxying the sensor to the rock. This was to minimise the effects of horizontal, man-created disturbances (such as the pump trucks) while providing a clear indication of seismic information generated at depth. In fact, the system was not greatly affected by surface disturbances and the output became saturated at the same time the fracture occurred (allowing for tramsission time). This experiment provided a clear indication that it is possible to selectively detect seismic disturbances depending on the exact manner in which that disturbance affects the structure to which the SMD is mounted.

As another embodiment a structural mount is provided that is sensitive to the shear wave rather than the compression wave. This allows the construction of a downhole instrumentation system to provide an output proportional to the shear wave velocity at the location of the sensor which, in turn, is a direct function of the porosity of the medium.

In order to obtain a measurement for use in a "high resolution" seismological instrumentation system that provides a significant increase in capability over current technologies, the seismological sensor of the present invention is primarily sensitive to seismic information generated at depth and is quite insensitive to seismic information that is transmitted along the surface. This is in contrast to conventional sensors that sense acceleration regardless of the source. The invention uses the SMDs applied to an anisotropic structure where the stiffness of the structure in two directions can be made extremely high while the stiffness in the measurement direction can be made quite low. This allows alignment of the sensor to the directions from which the information is caught while rejecting other information and permits separation of pressure and shear waves.

Systems constructed in accordance with the present embodiment of the invention are generally similar to conventional systems which provide geophones, with the exception that the geophones are replaced by appropriately mounted SMD sensors 221, sensitive to the appropriate directions, as shown in Fig. 39. The signal processing electronics and data processing equipment, recording equipment, software and displays required to produce the desired seismic information from the SMD signals is contained in the instrument truck 222.

### APPLIED COMMUNICATION/DETECTION SYSTEMS

According to other embodiments of the invention, structural moment detectors are used in systems for detecting and communicating information.

### Mechanical Health Monitoring System

According to this embodiment of the invention, systems are provided for monitoring the health of rotating, reciprocating and other moving machines having multiple components.

This invention as it applies to complex operating machines is based on the real time assessment of the "vibration signature" of the machine. Subsequently, this knowledge and information is applied to the design optimisation of future machines as well as the prediction of the remaining lifetime of existing machines.

The concept of monitoring the vibration signature of a mechanical system for an indication of the mechanical health of the system is well established. Every operating mechanical system has a distinct vibration signature which is produced when the system is operating properly. When a malfunction occurs the signature changes. Appropriate observation and analysis of the vibration signature can therefore provide an early indication of the severity and location of possible trouble and can help to prevent costly catastrophic failure.

The actual vibration signature of a machine contains many frequencies. This is a result of different components vibrating at various discrete frequencies and various mechanical resonances and nonlinear combinations of those signals in the machine. The resultant signal at a measurement point is therefore a complex vibration wave form which is processed to reduce it to its discrete frequency components for analysis.

The monitoring system of this embodiment consists of sensors (vibration transducers), a signal processor (monitoring system) and suitable displays or alarm generating devices. Sensors commonly in use are the piezoelectric accelerometer and the inductive velocity transducer. While there is limited agreement on the specific crossover frequency, there is general agreement that vibration severity is proportional to velocity at relatively low frequencies and proportional to acceleration at high frequencies. Thus, the applications of the piezoelectric and velocity transducers are naturally separated by frequency. In addition, velocity transducers are generally rugged, operate over wide temperature ranges, produce relatively high signal to noise outputs, but are limited to about 100ℓHz. Piezoelectric accelerometers are more sensitive to contamination. Both have frequency ranges which are significantly influenced by the method of attachment to the machine.

Both the velocity transducer and the piezoelectric accelerometer respond to displacements perpendicular to their mounting surface. The SMD, however, measures the difference between planes perpendicular to the surface to which it is mounted, that is, the measurement motion is $90^{\circ}$ to that of other sensors.

The significant point is not that suitable mountings will permit direct replacement of velocity transducers, strain gauges and piezoelectric accelerometers. Rather, the significant point is that the SMD responds to transverse and longitudinal waves in a body which cause the surface to deflect as little as $3.5 \times 10^{-9}$ radians across the 1.5 inch length of the sensor (a surface displacement of $5.3 \times 10^{-3}$ microinches).

In the measurement of these ultra small deflections, the SMD has a frequency response which is essentially flat from 0 to 40 kHz. Combinations of velocity and acceleration sensors in the best VMS systems currently in use provide a flat response from 0 to 20 kHz only.

In addition to this extreme sensitivity and wide frequency response, the SMD is rugged and well-suited to field and plant use.  It requires a minimum of electronics (standard buffer amplifiers and power supplies) to obtain a signal and it can be fabricated for less than $100.  The SMD can also be fabricated to provide less sensitivity for less cost.  The cost and sensitivity are design parameters and trade-off analyses are made for each application.

Thus, according to this embodiment of the invention, SMDs are not merely used to replace conventional sensors.  Rather, a system is provided which, using the unique measurement provided by the SMD, analytically and experimentally correlates and makes understandable the measurement of and meaning of vibration and mechanical health of complex equipment.

Specifically, the invention:

1.  Provides a warning if the structure approaches or exceeds operating limitations.

2.  Permits better use of lightweight, efficient structural design.  If pending failure can be predicted more accurately, design safety factors can be reduced.  This translates to lower cost and higher performance.

3.  Extends the life of existing systems.  If the remaining fatigue life of a system can be more accurately defined, replacement can be delayed.

4.  Provides "expert witness testimony."  The recorded information positively establishes conditions prior to an incident or failure.

Referring to Figure 40 which illustrates a typical application of the system of this embodiment of the invention, SMD sensors 251 are mounted at one or more

- 70 -

locations on the frame of a complex machine such as the lathe 252 illustrated in Figure 40. The output of the sensors 251 is fed to an electronics/data processing package 253 which is provided with appropriate data recorders 254 and displays.

Dynamic Vibration Simulation System

According to this embodiment of the invention, systems utilising SMDs are provided which measure the actual vibration environment experienced by a device and reproduce that environment in the laboratory.

According to one example chosen for purposes of illustration, systems are provided for automobile road testing in which an SMD is mounted near each wheel and the automobile is provided with appropriate electronics/data processing/recording packages. The car is then driven over typical roads and the vibrational environment is recorded.

In the laboratory, the automobile is mounted on shaker tables capable of exercising each wheel in three dimensions as well as, if desired, rotating each wheel. The shaker tables are programmed to provide the vibration environment previously recorded. The SMDs, mounted as during the actual test, sense the actual vibration, compare the actual vibration with the recorded vibration data and the difference is fed back to the shaker table drive system. The drive system then alters its program to force the differences to zero, thus duplicating the actual recorded environment, as shown in Figure 41.

Structural Navigation System

According to this embodiment of the invention, SMDs are employed in systems designed to measure the loads on an aircraft structure and infer aircraft attitude, velocity, acceleration and location.

The outputs of the SMDs are directly related to the deflection of the surfaces to which they are attached. These surfaces, such as the wing, tail and fuselage structures deflect as a result of the various forces applied to them such as lift, drag, thrust and the weight of the aircraft. In addition, forces are generated by the control surfaces when the aircraft's attitude is changed.

The aircraft can be considered to respond to Newton's laws of motion with six degrees of freedom. Thus if the forces and aircraft mass are known, acceleration is known. Velocity, position and attitude is then calculated by integration.

Aircraft weight is known at takeoff and fuel burned can be accounted for. Thus its mass is known. The SMD measurements are related to the forces so the forces can be calculated. Thus all the desired state variables can be determined.

One embodiment is depicted in Figure 42. The SMDs 261 are appropriately located to sense the needed forces. The signals are fed to the microprocessor 262. In the microprocessor 262 the forces, mass, etc. are used to calculate the desired state variables which are subsequently displayed 263.

Optical Platform Stabilisation Systems

In this embodiment of the invention, SMDs are employed in systems for providing precise active alignment of optical systems such as interferometers, holographs, lasers, etc.

Extremely precise alignment of optical systems is a requirement for their effective operation. The use of massive and expensive optical benches is essential.

In addition, environmental control must be exercised in order to minimise deflections resulting from temperature differences, moon tides, etc. Vehicle acceleration is also a problem in mobile systems.

This invention uses the SMD to sense minute deflections in the system. This information is then processed and fed to actuators which apply force to the structure and warp the surface to drive the SMD output back to the null position - thus correcting the misalignment.

One implementation is indicated in Figure 43. A laser 271 and mirror 272 are precisely mounted on the optical bench 273 so that the laser beam hits the centre of the target 274. The SMD 275 is mounted on the optical bench 273 and reigsters zero output as long as the optical bench remains aligned. When the optical bench deflects as a result of external influences, the SMD 275 senses the deflection. The SMD 275 signal is processed by the electronics 276 and fed to the actuator 277 which repositions the bench to drive the SMD signal back to zero output.

In accordance with another embodiment of the invention, SMDs are used in systems for precisely pointing laser beams in high rate-high density data storage retrieval systems.

In such systems, measurement of the order of $10^{-7}$ radians and pointing accuracies of similar magnitude are required. The majority difficulty lies in the stabilisation of the pointing mechanisms. The systems of the present invention, which include the SMD sensors having resolving powers of $10^{-9}$ radians, provide proper stabilisation of the pointing system through use of optical angle measurement and feedback to the electronics/data processing package.

Strain Gauge Replacement System

This embodiment of the invention provides a replacement for systems which normally apply strain gauge sensors.

The SMD measures the deflection of two normals to the surface at the points where the SMD is attached. A strain gauge responds to linear displacement, i.e. strain. Thus, the two measurements are fundamentally different.

This invention is a device using the SMD in a manner such that the device can directly replace a strain gauge and, at the same time, eliminate much of the sophisticated electronics associated with strain gauge technology.

More specifically this invention consists of an SMD and a mounting structure designed to cause the device to respond to linear displacement. One implementation is shown in Figure 44.

In Figure 44 the SMD 281 is attached to a structural mount 282 which, in turn, is attached to a surface 283. The strain is to be measured. Tensile strain of the surface 283 causes the legs of the structural mount 282 to deflect outward applying a bending moment to the upper portion of the structural mount 282. This is sensed directly by the SMD 281 and calibrated to indicate strain.

This system improves strain gauge technology by:

1)  sensing forces (strains) up to ten thousand times smaller than those of the best current strain gauges;

2)  eliminating sophisticated electronics; and

3)  expanding the frequency band width (0 - 50 kh).

## Voice Analysing System

According to this embodiment of the invention, systems including SMDs are provided for analysing voices for the purpose of identification.

The extreme sensitivity of the SMD and its wide frequency response are used to construct a microphone with essentially constant response over the complete audio/vocal range. The output from this microphone is then processed to produce the power spectral density of the signal which is used in a manner similar to an individual's finger prints.

In this embodiment of Figure 45, the SMD 291 is mounted on a rectangular diaphragm 293 to make a super sensitive microphone. The voice 292 vibrates the diaphragm 293. The SMD 291 senses the vibrations. The output is fed through the electronics 294, A/D converter 295 and microprocessor 296. A Fast Fourier Transform (FFT) is used in the microprocessor 296 to produce the power spectral density (PSD) of the voice. This PSD is then displayed 297 and compared with similar displays from the reference library 298. If the PSDs match, the voices are the same.

## Smoke Detector System

According to this embodiment of the invention, systems including SMDs are provided which detect smoke.

In this embodiment, the SMD case is modified to permit ambient air to circulate through the case and adds an electronic detection system to detect light scattered by the particles in this ambient air, specifically smoke particles.

The implementation is illustrated in Figure 46. In Figure 46A the essential optics of the standard SMD are illustrated. Light emitted by the LED 301 is incident on the mirror 302 and reflected back to the photocells 303. The case 304, while not necessarily sealed, does not permit circulation of ambient air.

In Figure 46B the case 304 is modified to permit ambient air to circulate freely through the SMD. A photocell detector 306 is installed in the side of the case 304. Again, light is emitted by the LED 301. However, a portion of this light is intercepted by the smoke particle 305 and scattered to the detector 306. This scattered light is interpreted to indicate the presence of smoke and an alarm is generated. Suitable baffles 307 are installed to shield the photocells 303 from scattered light.

Well Drilling Downhole Communications System

In this embodiment of the invention, systems which include SMDs are provided for communicating real-time data from the drilling bit of a well drilling rig to the surface for the purpose of improving drilling effectiveness in both exploration and production wells.

Rotary drilling has evolved as an efficient and effective means of exploring for hydrocarbon resources. During 1976, over $6 billion was spent to drill and complete over 40,000 wells in the United States alone. Recent emphasis on world energy requirements has brought deeper drilling, increased activity and higher costs for offshore drilling in the order of 5% per year. Hence, even a small improvement in drilling efficiency has a major economic impact on the drilling industry. Of the many possible methods to increase drilling efficiency, real-time data from the bit offers the greatest potential to improve drilling effectiveness in both exploration and production wells.

The present embodiment provides a system which collects data automatically at or near the bottom of the well bore while drilling, and transmits the data to the surface at a high rate in real-time. This invention provides the technology to practically and economically obtain the real-time data required to drill most safely and economically.

There are two distinct measurement capabilities required of such a system. The highest priority is providing an estimate of those parameters which indicate the safety of the drilling operation and the efficiency of the drilling process. This information is usually further subdivided into well control directional survey, and drilling optimisation. The second priority is the real-time logging of formation evaluation information.

Most of the sensor technology required to make the downhole measurements has been developed to some degree and proven. In the early 1960's, others demonstrated the necessary sensor capability, but lacked a telemetry system using downhole recorders for a permanent record of the data. The data transmission subsystem of the system remained the unproven link and this system fills that function. There are currently in existence four types of telemetry systems:

Mud Pressure Pulse  '
Hard Wire Telemetry
Electromagnetic  '
Acoustic

Each of these types of systems is under investigation by more than one company which indicates that a technical concensus as to the optimal method does not exist at this time.

The Mud Pressure Pulse System (MPP) changes the resistance to the flow of mud through the drill string, thus modulating the pressure in the mud. The pressure pulse (on the order of 50 psi) travels up the mud column at near the velocity of sound in the mud, about 4,000 - 5,000 ft/sec. Due to pulse spreading and modulating rate limitations, the rate of information transmission is relatively slow. The system has the slight disadvantage that it requires downhole power in order to modulate the mud pressure. MPP systems are quite old, dating back to the 1930's in concept; and in use, to the 1950's and 1960's. Several companies are pursuing the advanced development of such a system.

The hard wire systems have the greatest potential of providing the maximum capability and are currently used for logging and other borehole operations. However, the operational problems associated with providing positive connection in pipe systems under drilling conditions and operational flexibility in separate wire systems have not met the requirements for a practical, economical and reliable system.

Transmission of electromagnetic signals, both through the earth and drill pipe, have been studied as a telemetry system for downhole measurements while drilling. Several government and industry-funded projects have been undertaken to develop operational systems. The principal advantages of the system would be a potentially higher data rate and elimination of special drill pipe. The disadvantages of the system are that the low frequency electromagnetic signals used are near telluric frequencies and the background noises are quite high making signal detection difficult if not nearly impossible. Practical implementation requires repeaters along the drill string which increases cost and decreases operational reliability.

The other potential method for borehole telemetry is transmission of acoustic or seismic signals through the drill pipe. In general, the very low intensity of the signal which can be generated downhole, along with the acoustic noise generated by the drilling system and the attenuation of the earth or drill string, makes signal detection at the surface difficult. Several systems are being developed and several different products are currently on the market. The primary advantages of acoustic systems are their simplicity and low cost. The disadvantage is the low signal-to-noise ratio of the information to be sensed.

Referring to Figure 47, the present embodiment of the invention uses the SMD and associated electronics and processor as a sensor in a downhole communications device. Data is sensed downhole and converted to digital signals which are transmitted through the drill string as coded pulses by use of mechanical or electromechanical tappers. The pulses appear as vibrational energy in the drill string and are sensed, along with all the background noise associated with drilling, by the SMD 311. The transmitted information arrives at the surface with an extremely low signal-to-noise ratio. Processing 312 to acquire the information uses adaptive digital filtering and signal component Fourier estimation techniques. The decoded pulses provide the desired information.

Earthquake Detection System

According to this embodiment of the invention, systems including SMDs are provided for predicting and/or detecting earthquakes.

The invention uses the SMD to produce seismometers capable of responding to the high frequency ($\sim 1/6$ Uz) and very low frequency ($\sim 1$ per 10 minutes) waves characteristic of very early stages of earthquake
activity.

In one mode of application (see Figure 48) this
invention uses the SMD 321 mounted on a cantilevered
beam 322. The dimensions of the beam are chosen
such that the beam is tuned to the frequency of
interest. Vibrations are amplified by the beam
and sensed by the SMD.

In another mode shown in Figure 49, SMDs 323 are
mounted on the surface of rocks near a known fault
line. In this application the standard SMD is modified
to have its optical path length across the fault. In
essence the standard SMD is split with one half on
each side of the fault. Changes in orientation of
the rocks are sensed and used to indicate stress
across the fault 324.

In both applications the SMD output is fed through
its associated electronics to the microprocessor which
evaluates the data according to preprogrammed
instructions and activates appropriate displays and/or
alarm generators.

Structural Sonar System

According to this embodiment of the invention,
SMD systems are provided which utilise the structure
of an ocean-going vessel or submarine to passively
or actively detect other objects or vessels.

The invention involves mounting SMDs on the
structure of a vessel, configuring the shape of the
vessel structure appropriately and using the combined
SMD/Vessel structure as a super sensitive microphone
for listening.

In the active mode of operation the system sends out pulses which reflect from other objects and detects the reflected pulses.

In the passive mode of operation the system listens for signals originating from other sources.

Figures 50 A, B, and C depict concepts for implementation of this embodiment. Essentially, the system uses the ship structure 333 as a very large antenna which, combined with the 0 - 40 kHz frequency range of the SMDs 334, results in improved range and detection capability in comparison with prior art sonar systems.

Vibration Detection and Location System.

According to this embodiment, SMD systems are provided for detecting and locating unusual vibrations in aircraft and other vehicles such as automobiles.

This invention couples the unique sensitivity of the SMD measurements with sophisticated processing techniques to permit the determination of the precise location of unwanted (nuisance) rattles and vibrations.

The system consists of at least four (4) SMD sensors, their associated electronics, processing capability, and suitable displays. In one mode of operation the invention is permanently located in the vehicle. By sensing the vibration and evaluating the time of arrival of correlated vibrations at different sensors, the location can be determined. This is accomplished by the standard use of time of arrival and transmission velocity information. Basically, four independent measurements are required to solve four equations in four unknowns(3 spatial, 1 time).

In another mode of operation th: system is maintained in a repair facility and .ie vehicle brought

to the facility for test. In this mode each type vehicle is analysed and sensor locations specified. This system is depicted in Figure 51. The vehicle 346 is positioned on shakers 345. The four sensors 341 are mounted on the vehicle at prescribed locations The sensor outputs are fed through the cable 342 to the microprocessor 343. The microprocessor solves for position of the offending rattle and displays 344 the coordinates of its location. With the location known, the vibration can be repaired.

Battlefield Force Detector.

According to this embodiment of the invention, SMD systems are used for assessing movement and deployment of men and equipment under battlefield conditions.

The extreme sensitivity of the SMD provides a seismic detector and the invention incorporates such a detector into a system which is capable of providing information of type, number, location, and movement of enemy forces.

The SMD is mounted on a diaphragm and used as a geophone. The sensitivity of the SMD coupled with the variable design parameters (material, thickness, size, mounting technique) of the diaphragm produce a geophone of remarkable performance.

When suitably deployed, any motion near the sensor produces a characteristic vibration signature. The existence of the signal is used to indicate movement and the frequency content is analysed to provide information about the source. Using triangulation techniques and/or proximity to various sensors, the location and direction of movement can be determined.

The system is capable of detecting amd monitoring movement on the ground or in below-ground tunnels. Sensors can be hardwired to processing equipment or can be self-contained battery powered units which communicate optically or electronically with monitoring stations and/or aircraft.

Figure 52 depicts one mode of application of this embodiment. The package 351 is deployed near a jungle trail. Enemy tanks 352 are detected. The information is radioed to the orbiting electronics aircraft 353 which calls in fighter aircraft 354 to strike the tanks.

Figure 53 depicts another mode of operation. Sensors 361 are deployed and are hardwired to the electronics, processing and display system 363. A tank 362 and a group of soldiers 364 are sensed and tracked. Frequency signatures permit discrimination of the tank and men.

Automatic Line Judge.

In this embodiment of the invention, SMD systems are provided to automatically determine and signal when a game ball falls outside the playing area.

In sporting games, such as tennis, it is often difficult to determine where the ball hits the ground relative to an out-of-bounds line. Current practice involves the use of line judges in important matches and/or the players' best judgment in ordinary matches. No simple automatic system exists for performing the function.

This invention uses the extreme sensitivity of the SMD and the rapid processing capability of a dedicated microprocessor to determine the location of a surface hit in the vicinity of the playing field.

Using two SMDs 371 on a tennis court as shown in Figure 54, the time of arrival of the seismic waves 372 generated when the ball strikes the surface provides sufficient information to determine location.

---

A structural information detector embodying the invention and suitable for use in the systems described hereinbefore is shown in Figs. 55-60. Fig. 55 is a block diagram which illustrates the major sub-components of the structural information detector and their cooperative interrelationships. The structural information detector, generally indicated by the reference numberal 410, is depicted for purposes of illustration as being mounted upon a simple cantilevered beam 411 and consists of a housing 412, an optical sensor 413, sensor power supply 414, raw signal conversion circuitry 414c and signal-processing electronics, including a microprocessor and appropriate software 415. The optical sensor 413, preferably a structural moment detector of the type generally disclosed in our issued patent, U.S. 4,287,511, and in our co-pending application, Serial No. 265,031 (sometimes also known as a "flexural rigidity sensor") measures, as indicated by the dashed line 413a, the relative orientation of surface coordinate vectors which are, as illustratively depicted in Fig. 55, normals 416 to the surface 411a of the beam 411. If a force F (417) is applied in the direction of the beam 411 will cause a change in the relative orientation of the surface coordinate vectors 416 to the positions indicated by the dashed lines 416a, i.e., from the angular orientation 418 $\theta 1$ (shown in Fig. 55, illustratively, as $180^{O}$P to an angular orientation 418a $\theta 2$ which (as illustratively depicted in Fig. 55) is greater than $\theta 1$. Power 419 from an external power source 419a is supplied to the circuitry 414 which, as explained below, provides a regulated power supply 414a to the optical sensor 413. The raw data 413b from the optical sensor 413, which could be a variable voltage or a variable current, is supplied to the raw signal conversation portion of the circuitry 414, which converts the raw data, as will be further explained below, to a form which is the input 414b to the signal and data-processing electronics and software 415, which processes the converted signal 414b and provides, as the output 415a of the structural information detector 410, a signal which embodies useful structural information 420 which directly indicates the effect of the force F acting on the beam 11. As indicated by the line 420a, the useful structural information 420 can be utilised in any or all of a variety of ways, i.e., it can be used as the input to a direct display 420b which may be a simple galvanometric meter, liquid crystal display, light emitting diode display, cathode ray tube or the like. Also or alternatively, the useful structural information 420 can be used as the input to a semi-permanent or permanent recording device 420c, such as paper recorders, magnetic recorders, semiconductor storage device, bubble memory storage devices, or holographic storage devices. Also or alternatively, the useful structural information 420 can form the input to various control devices 420d such as servomotors and other similar electromechanical devices.

As will be appreciated by those skilled in the art, and as indicated in our issued patent and co-pending application, it may be necessary or desirable in certain end-use applications to employ an array of structural information detectors of the type generally illustrated in Fig. 55, in which case it may be necessary or desirable to provide communication paths between some or all of the individual structural information detectors in the array and/or with suitable central data display, recording and/or control components, as well as with additional hardware and software which correlate the useful structural information outputs of the individual structural moment detectors in the array. These details have been omitted for the purpose of clarity as the present invention is directed to the individual structural information detectors whose only input is an external power source and whose single output is directly useful structural information.

In the presently preferred embodiment of the invention, the raw data output 413b of the optical sensor 413 (referring to Fig. 55) is (referring to Fig. 56) the input to the signal-processing electronics, including computational software therein depicted. The function of the circuitry depicted in Fig. 56 is to convert the raw data input 413b from the optical sensor into data suitable for electronic data processing and then to perform the data-processing function to yield a signal, the components of which directly provide useful structural information. According to the presently preferred embodiment of the invention, the conversion is performed with analog electronics, rather than digital. The analog electronics perform two distinct functions. First, the output signal 413b from the optical sensor is measured and converted to a proportional voltage in a voltage follower circuit which, for clarity of illustration, are those components which are located within the dashed line 421. The second function is to amplify the proportional voltage signal from the voltage follower circuit 421 by feeding it through a gain control 422 into an amplifier which, for purposes of clarity of description, are those components located within the dashed line 423. The voltage follower circuit 421 operates as a short circuit load for the photovoltaic cells of the optical sensor. Feedback is added in the amplifier circuit 423 to shape the upper end of the frequency response so that spurious high frequency noise is attenuated. This function is performed by applying the output of IC1 (pin 7) to the input (pin 6) of IC2 through a voltage divider formed by R7-R8. IC2 acts as a low-pass filter. The output of IC2 (pin 7) is fed back through R16 to the input 3 of IC1 to act as an automatic bias adjustment. An offset voltage adjustment is provided to remove any bias due to photocell mismatch.

The gain control 422 provides a means of balancing the mechanical gain of different sensors and compensating for components variation. The nominal adjustment range is $\pm15\%$. The amplifier 423 is a high gain direct-coupled amplifier with feedback to further attenuate high frequency noise levels. Nominal gain is 1.5 volts/microamp and the bandwidth is normally initially set at 50-500 Hz. In essence, A2 is a variable cut-off low-pass filter. If the DC case is considered, its output will seek a level such that the voltage presented to pin 3 of A1 is equal to that presented to pin 2 by the voltage follower circuit. The scaling of the system is such that

$$U_{null} = V_{int} \; (R17/R16+R17) = V_{in}$$

where $V_{int}$ is the integrator output, $V_{in}$ is the first stage and $U_{null}$ is the input to A1, pin 2. Thus, for low frequency, $V_{int}$ represents a scaled value equal to or greater than $V_{in}$ independent of the gain in the second stage of the amplifier. The implication of this is that the gain of the second stage can be set very high for frequencies above the autonumm roll-off without completely losing DC information.

Support and bias circuits which include the components which are, for clarity of illustration, enclosed within the dashed line 424 are provided to provide conditioned power and bias voltages for the components of the voltage follower 421 and amplifier 423.

The output 426 of the amplifier 423 is an analog signal which is converted to a digital signal in the A-D converter 422a. A non-limiting, illustrative, example of a suitable analog-digital converter is manufactured by Analog Devices, No. HAS 1202.

Finally, the signal-processing electronics also includes a microprocessor 425 and appropriate computational software which converts the output signal 422b of the A-D converter 422a into electrical signals 420 which directly provide data related to the effect of the force acting on the structure to which the structural information detector is attached. In the presently preferred embodiment, this component includes a microprocessor, the necessary supporting devices and a power.supply, details of which are omitted for purposes of clarity because they are well-known to those skilled in the art. Suitable non-limiting examples of microprocessors which can be employed are the TI9000 or the Intel 8086.

All of the elements described in Figs. 56 and 57 may be fabricated on a printed circuit board using standard integrated circuits or on a single thick film substrate where the circuits have been wire bonded to the substrate. In the embodiment of the invention described in connection with Fig. 59, these components may be made as a single integrated circuit on the same semiconductor substrate chip used in fabricating the optical sensor.

According to the presently preferred embodiment of the invention, yet another function of the signal-processing electronics is to provide a precise current to the light emitting diode of the optical sensor.

Typical non-limiting, illustrative, values of the components of Fig.56 are set forth below:

Voltage Follower/Amplifier

    R1 - 220K
    R5 - 1K
    R6 - 2.2K
    R9 - 2.2M
    R23 - 82
    A1 - Operational Amplifier LF353/2

Second Stage Amplifier

    R2 - 680K
    R3 - 10K
    R4 - 1M
    R7 - 100K
    R8 - 10K

R13 - 2.2M
R15 - 220K
R16 - 10K
R17 - 1K
C2 - 47PF
C3 - 10MF
C4 - 5PF
A1 - Operational Amplifier LF 353/2
A2 - Operational Amplifier LF 353/2

Support and Bias Circuits

R10 - 100K
R11 - 1.8K
R12 - 100K
R14 - 1.8K
C5 - 10MF
C6 - 10MF
C7 - 10MF
C8 - 10MF
Z1 - LM336
Z2 - LM336

For the sake of clarity, the power supply circuitry has been separated from the circuitry of Fig. 56 and is shown schematically in Fig. 57. The 15 volt power supply 431 is provided by the support and bias circuitry 424 of Fig. 56

The power supply circuitry of Fig. 57 utilises two amplifiers in a high gain feedback arrangement to provide the necessary precise current 432 to the light emitting diode.

Typical non-limiting, illustrative, values of the components of Fig. 57 are set forth below:

Power Supply

        R18 - 3.3K
        R19 - 10K
        R20 - 10K
        R21 - 10K
        R22 - 47
        C9 - 10MF
        C10 - 10MF
        IC3 - Operational Amplifier LF353/2
        Q1 - 2N5457
        Q2 - TIP21

Fig.58 is a sectional view illustrating a structural information detector constructed in accordance with one of the preferred embodiments of the invention and consists of a first housing sub-assembly generally indicated by reference character 440 containing the sensor power supply/raw signal conversion/ signal-processing electronics 441 of Figs. 56-57, a light emitting diode 442, a pair of photovoltaic detectors 443 and a collimating lens 444 carried proximate the open end of a barrel portion 445 formed in the housing 440. A second housing sub-assembly, generally indicated by reference numeral 446, carries a plane surface mirror 447 on the inner end 448 of a mating barrel portion 449 formed in the housing sub-assembly 446. Although a substantial clearance 450 is shown between the barrel portion 445 formed in the first housing sub-assembly 40 and the barrel portion 449 formed in the second housing sub-assembly 446, it will be understood by those skilled in the art that this clearance is shown only for the purpose of clarifying the mechanical relationship of the two housing sub-assemblies 440 and 446. In actuality, the mating barrel portion 449 formed in the second housing sub-assembly 446 is shaped and dimensioned to receive the barrel portion 445 formed in the first housing sub-assembly 440 with an interference fit therebetween, to form a unitary structurally integrated device which excludes ambient light from the interior of the barrel portions 445 and 449 and which facilitates and assists in maintaining precise optical alignment of the two sub-assemblies.

Structural information detectors of the type depicted in Fig. 58 have been successfully manufactured and tested which are in the size range of as small as one inch in the major dimension. Present work indicates that, eventually, this can be reduced to 1/4-1/8" in the major dimension.

Fig. 59 illustrates yet another presently preferred embodiment of the invention in which all of the components of the structural information detector are carried by any suitable semiconductor substrate, such as a silicon chip 451 carries the light emitting diode 452 on an inner face 453 of one of the legs of the U-shaped chip and leads 454 for providing power to the light emitting diode. A pair of photovoltaic cells 455 are grown by known semiconductor manufacturing techniques on the inner face 456 of the opposing leg of the U-shaped chip 451. Bending of the chip 451 induced by bending of a structural member to which it is attached by any suitable technique, such as epoxy bonding, causes a variation in the light falling on the photocells 455, depending on the relative orientation of surface coordinate vectors (normals) 456. The circuitry of Figs. 56 and 57 is formed by known semiconductor manufacturing techniques in the portion 457 of the silicon chip 451. The entire chip is then received within a suitable housing indicated by the dashed lines 458 to protect the internal components from adverse ambient environmental effects and to prevent stray light from interfering with the operation of the optical components 452 and 455. As in the case of the embodiment of Fig. 58, devices such as those depicted

in Fig. 59 can be manufactured in a size as small as 1/4-1/8" in the major dimension.

According to yet another presently preferred embodiment of the invention, as depicted in Fig. 60, the components of the optical sensor 410 (Fig. 55) can be carried by an elongate light transmission member, generally indicated by reference character 461, formed of a light-transmitting flexible material such as, for example, methacrylate polymers and copolymers known in the art. A concentrating lens 462 is formed in one end of the light-transmission member 61 and the other end 463 carries a light source 464 such as a LED and a pair of photocells 465 which generate electrical signals indicating the relative orientation of surface vector coordinates (normals) 466 to the surface of a structural member upon which the structural information detector is mounted. If desired, the length of the light-transmission path 467 can be lengthened by cutting or forming facets 468 in the external surfaces of the elongate light-transmitting member which will reflect light beams 468 transmitted from the LED to the concentrating lens 462 and which are then reflected 469 to the photocells 465. The entire optics system illustrated in Fig. 60, along with the sensor power supply/raw signal conversion/signal-processing electronics components of the structural information detector of Fig.55, are then enclosed in a suitable housing to protect the optics and electronics components from adverse ambient conditions and from interference caused by stray light. The housing is omitted in Fig. 60 for purposes of clarity.

CLAIMS

1.  A system for collecting and interpreting data indicative of the effect (41) of at least a selected one of a plurality of forces acting on a structure, characterised in that said system comprises, in combination:

    a)   at least one structural moment detector (42) carried by said structure for generating output signals (43) in response to said plurality of forces acting on said structure;

    b)   processing means (44) for processing said output signals (43) to modify the information content thereof, including rejecting components of said signals (43) indicative of the effects of extraneous forces other than said selected one;  and

    c)   signal-manipulating means (48) for manipulating the processed signals (43) output by the processing  means (44) to provide secondary signals (49) responsive to the condition of said structure as a result of the application of said selected force or forces.

2.  A structural information detector (410) for collecting and interpreting data indicative of the effect of at least one of a plurality of forces (F) acting on a structure (411)characterised in that said structural information detector (410) comprises, in combination:

    a)   a housing (412) adapted to be attached to the surface of said structure (411);

    b)   optical means (413) within said housing (412) for detecting the relative orientation (413a) of spaced surface coordinate vectors (16a) of said structure (411), and for generating primary signals (413b) in response to changes in said orientation;

c)  circuit means (414c) within said housing (412) for converting said primary signals (413b) to a form usable by signal-processing electronics; and

d)  signal-processing electronics means (415) within said housing (412), including computational software, for processing the converted primary signals (414b) to secondary signals (415a) which embody useful information which directly indicates the effect of at least one of a plurality of forces (F) acting on said structure (411).

3.  A structural information detector according to Claim 2, characterised in that said optical means (413), said circuit means (414c) and said signal-processing electronics means (415) are carried by a single-piece semiconductor substrate (451) received within said housing (412).

4.  A structural information detector according to Claim 2, characterised in that said housing (412) comprises first and second housing sub-assemblies (440, 446) and in that:

a)  said first housing sub-assembly (440) contains said circuit means (441), said signal-processing electronics means (441), and those components of said optical means (413) which include a light source (442), a plurality of photovoltaic detectors (443), and a collimating lens (444); the light source (442) and photovoltaic detectors (443) being carried on the inner face of a hollow barrel portion (445) of said first housing sub-assembly (440) and said collimating lens (444) being carried proximate the open end of said barrel portion (445);

b) said second housing sub-assembly (446) contains, as another component of said optical means (413), a plane surface mirror (447) carried on the inner end (448) of a barrel portion (449)of the second housing sub-assembly (446), the two said housing barrel portions (445, 449) being shaped and dimensioned to mate one within the other with an interference fit therebetween to form a unitary structurally-integrated device; and

c) said first and second housing sub-assemblies (440,446) are mountable at spaced points on said structure (411).

5. An optical sensor adapted for use in a structural moment detector or as the said optical means (410) of the structural information detector of Claim 2, characterised in that the sensor comprises:

a) an elongate light-transmission member (461) formed of a light-transmitting flexible material and having a light-transmitting/ receiving end (463) and a reflecting end;

b) a concentrating lens (462) formed in the reflecting end of the member (461);

c) a light source (464) carried by said light-transmitting/receiving end (463) of the member, the light source (464) being positioned such as to direct light through the member (461) toward said reflecting end;

d) light-receiving means (465) carried by the light-transmitting/receiving end (463) of the member, the light-receiving means (465) being arranged to receive light transmitted through said member from the light source (464) to the concentrating lens (462) and reflected thereby back through said member to the light-receiving means (465), and to generate electrical signals in response to the received light; and

e) means for connecting the said ends of the light-transmission member (461) to spaced points on said structure (411) such that bending of the structure causes corresponding bending of the light-transmission member (461) and, in turn, causes a variation in the amount of light received by the light-receiving means (465).

6. A structural moment detector according to Claim 2, characterised in that said optical means (410) are constituted by an optical sensor in accordance with Claim 5.

7. A system according to Claim 1, characterised in that the or each structural moment detector (42) is constituted by an optical sensor in accordance with Claim 5.

8. A system according to Claim 1, characterised in that the or each said structural moment detector (42) is provided in the form of a structural information detector (410) in accordance with any one of Claims 2, 3, 4 or 6, the said circuit means (414c) and signal-processing electronic means (415) of the structural information detector (410) together constituting the processing means (44) and signal-manipulating means (48) associated with the structural moment detector (42).

*FIG-1*

+6V

LED

LED

$T_1$

$R_2$

$T_2$

$R_1$

$R_1 = 4990$ OHM
$R_2 = 20$ OHM
$T_1 = T_2 = 2N2222$
    OR EQUIVALENT
LED= LIGHT EMITTING DIODE

*FIG-2*

BIAS
CONTROL

$R_1$

$R_2$

PV

OUTPUT

$R_1 = 1-10M\Omega$
$R_2 = 100-700K\Omega$
PV= PHOTOVOLTAIC
    CELL

*FIG-3*

```
┌──────────────┐    ┌─────────┐    ┌─────────────┐    ┌────────────┐    ┌────────────┐    ┌────────────┐    ┌─────────┐
│  STRUCTURAL  │    │  SMD    │    │   SIGNAL    │    │  ANALOG    │    │            │    │   DATA     │    │         │
│   BEHAVIOR   │───▶│ SENSOR  │───▶│ PROCESSING  │───▶│    TO      │───▶│    DATA    │───▶│ RECORDING  │───▶│  DATA   │
│              │    │ ARRAY   │    │    AND      │    │  DIGITAL   │    │ PROCESSING │    │    AND      │    │ DISPLAY │
│              │    │         │    │  BUFFERING  │    │ CONVERSION │    │            │    │  EDITING   │    │         │
└──────────────┘    └─────────┘    └─────────────┘    └────────────┘    └────────────┘    └────────────┘    └─────────┘
      41               42      43        44       45        46      47        48      49        50       51       52
```

*Fig-4*

*Fig-5*

ELECTRONICS

DISPLAY

55   56   57   58   59   60

61   62   63   64

ELECTRONICS → MPU → DISPLAY

*Fig-6*

*Fig-7*

71   72   73   74   75

FIG-8

FIG-9

| ELECTRONICS | → | DISPLAY |

FIG-10

| ELECTRONICS | → | DISPLAY |

REFERENCE

FIG-11

105

| TORQUE | |
|--------|--|
| RPM | PWR |

104

108

PROCESSOR

LOAD

109

101

106

103

*FIG-12*

102

102

101

*FIG-13*

*FIG-14*

*FIG-15*

FIG. 16

**Fig. 17**

SENSORS

SIGNAL PROCESSING AND BUFFERING
- POWER SUPPLY /117
- VOLTAGE FOLLOWER /118
- SIGNAL AMPLIFIER /119

ANALOG TO DIGITAL CONVERSION
- SAMPLE /120
- HOLD /121
- CONVERSION /122

124

DATA PROCESSING COMPUTER /123

125

DATA RECORDING AND EDITING /126

DATA DISPLAY AND KEYBOARD /127

125  128  130  129

**Fig. 18**

132  133  131

PROCESSOR /134
- ELECTRONICS
- MICRO-PROCESSOR
- DISPLAY

0067531

FIG-19

FIG-20

FIG-21

FIG-22

ELECTRONICS

A/D CONVERTER

PROCESSOR

DISPLAY/RECORDER

Fig-23

Fig-24

Fig-25

_FIG_26_

_FIG_27_

_FIG_28_

_FIG_29_

FIG-30

FIG-31

FIG-32

FIG-32a

SECURE AREA

$SMD_1$ → $ST_1$ — 36

$SMD_2$ → $ST_2$ — 36

$SMD_3$ → $ST_3$ — 36

$SMD_n$ → $ST_n$ — 36

31   33   35

LOCAL SECURITY SYSTEMS — 46

30

CONTROL CENTER

ACTIVATION RCVRS (SMD) — 49

50

SIGNAL RCVRS (SMD) — 38 → SIGNAL PROCESSING — 40

39   48

CONTROL CENTER ALARMS & SYSTEMS — 44 ← ACTIVATION — 43 → ACTIVATION SIGNAL TRANSDUCERS — 47

42   43a

37   48   34

EXTERNAL ALARMS & SYSTEMS — 45

FIG-33

11/21

0067531

FIG-34

FIG-35

FIG-36

FIG-37

FIG-38

FIG-39

INSTRUMENT TRUCK
222
221
221
TELEPHONE LINE
SHOOTING TRUCK
SHOT POINT
SHALE
LIMESTONE
SHALE
LIMESTONE

*Fig-40*

*Fig-41*

*Fig-42*

FIG-43

274

272

271

275

273

ELECTRONICS
&
PROCESSOR

277

276

FIG-44

282

281

283

292

293

291

ELECTRONICS 294

A/D CONVERTER 295

MICRO-PROCESSOR 296

RELATIVE POWER

FREQ

DISPLAY

247

COMPARE

RELATIVE POWER

FREQ

298

REFERENCE LIBRARY

FIG-45

301

304

302

303

FIG-46A

306

301

304

305

307

302

303

FIG-46B

FIG.-47

FIG-48

FIG-49

FIG-50A

FIG-50B

FIG-50C

FIG-51

F I G - S 2

F I G - S 3

PROCESSOR

SIGNALLING DEVICE

F I G - S 4

Fig-55

DISPLAY 420b

RECORDING 420c

CONTROL 420d

420a

410

416  416(a)  413  418  416  416a

412

OPTICAL SENSOR 413

414a  413b  413a

POWER SUPPLY 414

SIGNAL PROCESSING

POWER 419a  419

414  414b  415

SIGNAL CONVERSION 414c

415a  420

USEFUL STRUCTURAL INFORMATION

F 417  417a

411a

411

d

Fig-56

+15    +8    Fig-57

R19    3
      Q1    1
      2

+15

R20

R21    R22    132
              LED DRIVE

7    +    5
     Q2
     -    6

442    445    450

441

444
443    447

440    450    449    448

Fig-58

FIG-59

457

459

456 459

458

455

452

458

453

451

458

454

FIG-60

470

466

462

466

468

464

469

467

465

465

471

461

63